# EUROPÄISCHE PATENTSCHRIFT

(11) **EP 0 610 847 B1**
(45) Veröffentlichungstag und Bekanntmachung des Hinweises auf die Patenterteilung: **02.05.2001**
(21) Anmeldenummer: 94101800.4
(22) Anmeldetag: 07.02.1994
(51) Int. Cl.: C08F 232/08

(54) **Fasern aus Cycloolefincopolymeren**
Fibres of cyclo-olefin polymers
Fibres de polymères de cyclo-oléfines

(30) Priorität: 12.02.1993 DE 4304317
(43) Veröffentlichungstag der Anmeldung: 17.08.1994
(73) Patentinhaber: Ticona GmbH, 65451 Kelsterbach (DE)
(72) Erfinder: Osan, Frank, Dr., D-65779 Kelkheim (DE); Brekner, Michael-Joachim, Dr., D-60529 Frankfurt (DE)

(56) Entgegenhaltungen:
- EP-A- 0 407 870
- EP-A- 0 503 422

## Beschreibung

Die Erfindung bezieht sich auf ein Verfahren zur Herstellung einer Faser aus Cycloolefincopolymer.

Polyolefinfasern sind bisher auf Basis von Polyethylen und Polypropylen bekannt. Eine sehr vorteilhafte Eigenschaft dieser Polyolefin Fasern, ist ihre hohe Lösungsmittelbeständigkeit. Sie sind im Wesentlichen gegen alle polaren Lösungsmittel (z. B. Ketone, Alkohole, organische Säuren, Esterverbindungen, Amidverbindungen) und wässrige Medien (z. B. wässrige Säuren, Laugen) beständig, und sind bei Raumtemperatur auch gegen unpolare Lösungsmittel wie gesättigte Kohlenwasserstoffe (z. B. Öle, Benzine) resistent. Diese Eigenschaft, kombiniert mit einer hohen chemischen Resistenz, hat den Polyolefinfasern große Anwendungsgebiete auf dem Textilsektor und im technischen Bereich eröffnet. Hochorientierte Fasern aus hochmolekularen PE sind bekannt für ihre sehr hohe Reißfestigkeit bei Raumtemperatur. PE- und PP-Fasern werden auch zur Herstellung von Geweben und Vliesen benutzt.

Häufig spielt dabei die thermische Formbeständigkeit, z.B. im Zusammenhang mit der Sterilisierbarkeit oder anderen Prozessen, wo höhere Temperaturen auftreten (z.B. Vliese für Heißwasser- und Gasfiltrationen), eine wichtige Rolle. Ungünstigerweise beginnen die mechanischen Eigenschaften von PE-Fasern schon knapp oberhalb Raumtemperatur abzufallen. Ein deutlicher Verfall ist ab ca. 70 bis 80°C festzustellen.

Cycloolefincopolymere mit einer hohen Einbaurate an Cycloolefin sowie Cycloolefinhomopolymere besitzen aufgrund ihrer hohen Glastemperatur eine sehr hohe thermische Formbeständigkeit und weisen deshalb gute mechanische Eigenschaften auf. Darüberhinaus sind sie hervorragend resistent gegen polare Lösungsmittel wie Wasser, Alkohol, Aceton und Dimethylformamid, scwie gegen wässrige Säuren und Laugen. Ungünstigerweise lösen sich jedoch gut in aliphatischen und aromatischen Kohlenwasserstoffen bzw. werden sie von diesen stark angequollen

Aufgabe der Erfindung war es, ein Verfahren zur Herstellung von Polyolefinfasern bereitzustellen, die hinsichtlich ihrer Lösungsmittelfestigkeit mit Polyethylen- und Polypropylenfasern vergleichbar sind und gleichzeitig eine höhere thermische Formbeständigkeit, als diese bekannten Polyolefinfasern aufweisen und aus der Schmelze versponnen werden können.

Es wurde gefunden, daß diese Aufgabe mit Fasern aus teilkristallinen Cycloolefincopolymeren gelöst werden kann, die weniger als 100 ppm (bezogen auf das Gesamtgewicht des Polymeren) Katalysatorreste enthalten.

Die Herstellung teilkristalliner Cycloolefincopolymere wird in der EP-AO 503 422 beschrieben. Versuche haben gezeigt, daß die so hergestellten Polymere Katalysatorreste (insbesondere Metallocen- und Cokatalysatorreste) größer 100 ppm enthalten. Bei einer Verarbeitung über die Schmelze (bei ca. 300°C) erweisen sich diese Produkte als thermisch labil. Dies äußert sich in einer Braunfärbung des Polymers. An dünnen Preßplatten (Dicke 200 *µ*m) zeigten sich deutlich Gelpartikel (Stippen) die durch eine lokale Vernetzung, ausgelöst durch Katalysatorreste, des Polymers entstanden sein dürften. Verspinnversuche an Fasern die gemäß EP-A 503 422 hergestellt wurden, verliefen unbefriedigend, da die Gelpartikel zum Faserabriß führten. Es wurde festgestellt, daß sich solche Cycloolefinpolymere nur dann zur Faserherstellung eignen, wenn der Restkatalysatorgehalt unter 100 ppm liegt.

Die Polymerisation der Cycloolefine verläuft in Masse oder Lösungsmitteln in Gegenwart von Metallocenkatalysatoren unter Erhalt der Cyclen (EP 407870, DE 84036264). Als Lösungsmittel werden hauptsächlich Kohlenwasserstoffe eingesetzt.

Die Erfindung betrifft daher ein Verfahren wie beanspruchs in Anspruch 1 wobei das Cycloolefincopolymer hergestellt wird durch Polymerisation von 30 bis 99,9 Gew.-%, bezogen auf die Gesamtmenge der Monomeren, mindestens eines symmetrischen, polycyclischen Olefins der Formeln I, II, III, IV, V oder VI 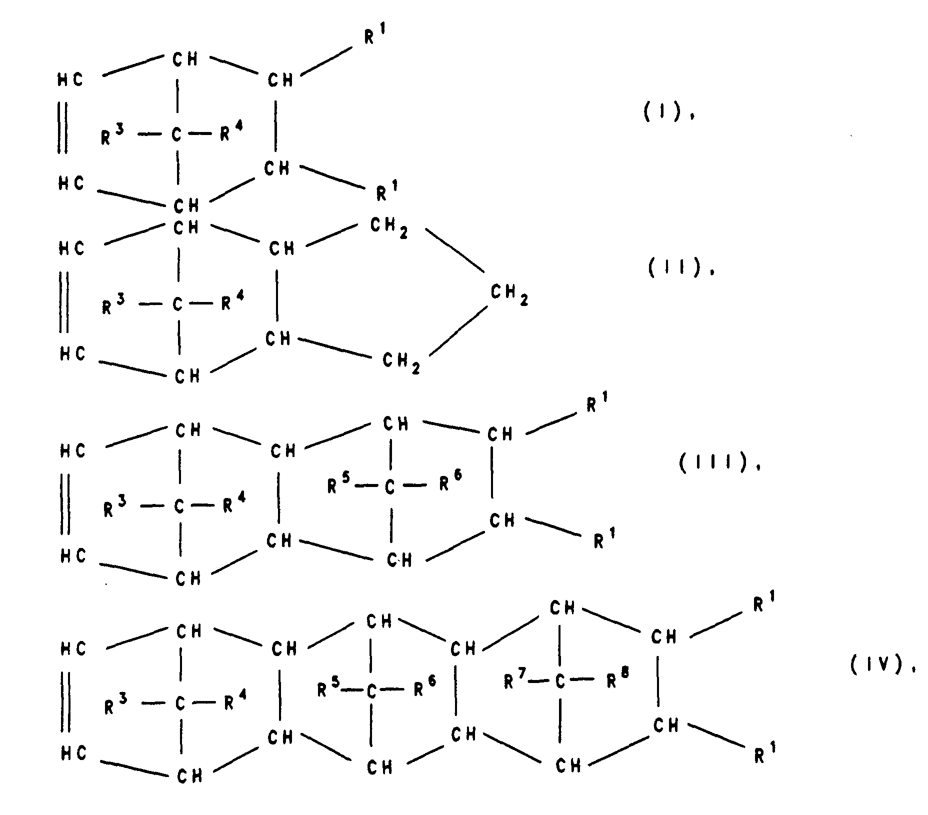 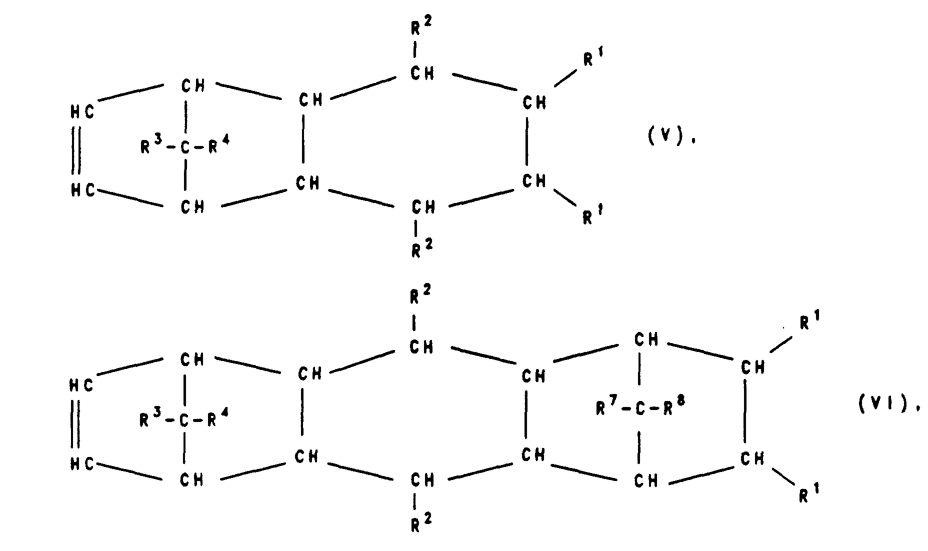 worin R¹, R², R³, R⁴, R⁵, R⁶, R⁷ und R⁸ gleich oder verschieden sind und ein Wasserstoffatom, einen C₆-C₁₆-Aryl- oder einen C₁-C₈-Alkylrest bedeuten,
0 bis 50 Gew.-%, bezogen auf die Gesamtmenge der Monomeren, eines monocyclischen Olefins der Formel VII 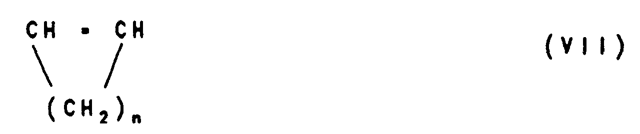 worin n eine Zahl von 2 bis 10 ist, und
70 bis 0,1 Gew.-%, bezogen auf die Gesamtmenge der Monomeren, mindestens eines acyclischen Olefins der Formel VIII 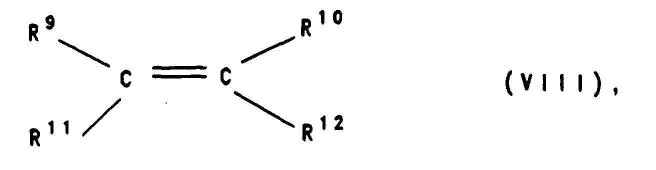 worin R⁹, R¹⁰, R¹¹ und R¹² gleich oder verschieden sind und ein Wasserstoffatom oder einen C₁-C₈-Alkylrest oder C₆-C₁₆-Arylrest bedeuten, bei Temperaturen von -78 bis 150°C und einem Druck von 0,01 bis 64 bar, in Gegenwart eines Katalysators, welcher aus einem Aluminoxan der Formel IX 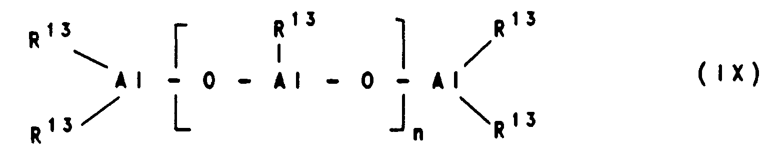 für den linearen Typ und/oder der Formel X 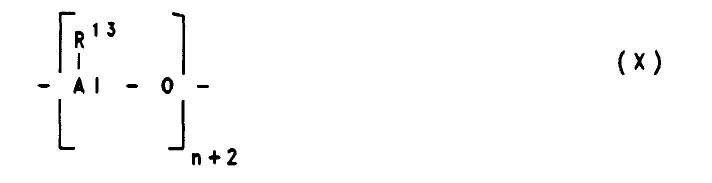 für den cyclischen Typ, wobei in den Formeln IX und X die Reste R¹³ gleich oder verschieden sind und eine C₁-C₆-Alkylgruppe oder Phenyl oder Benzyl bedeuten und n eine ganze Zahl von 0 bis 50 ist, und einem Metallocen der Formel XI 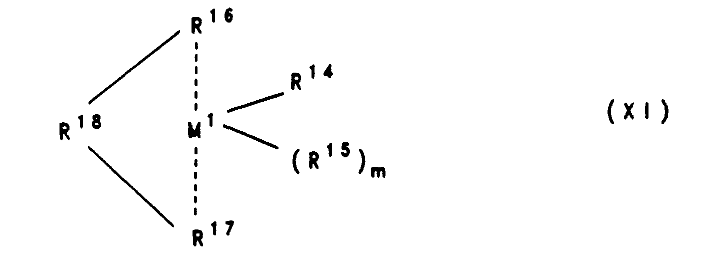 besteht, worin
- M¹: Titan, Zirkon, Hafnium, Vanadium, Niob oder Tantal ist,
- R¹⁴ und R¹⁵: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- m =: 1 oder 2
- R¹⁶ und R¹⁷: verschieden sind und einen ein- oder mehrkernigen Kohlenwasserstoffrest, welcher mit dem Zentralatom M¹ eine Sandwichstruktur bilden kann, bedeuten, wobei der Teil des Moleküls der durch R¹⁶, R¹⁷ und M¹ gebildet wird C₁-Symmetrie aufweist,
- R¹⁸: 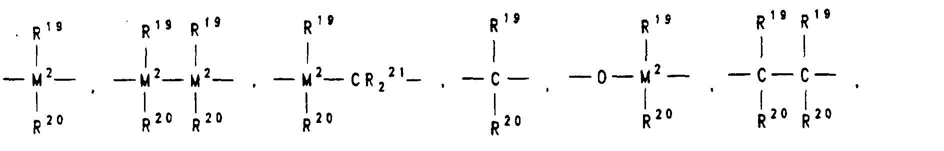 = BR¹⁹ = AIR¹⁹, -Ge-, -Sn-, -O-, -S-, = SO, = SO₂, = NR¹⁹, = CO, = PR¹⁹ oder = P(O)R¹⁹ ist, wobei R¹⁹, R²⁰ und R²¹
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden, und
- M²: Silizium, Germanium oder Zinn ist, dadurch gekennzeichnet, daß der Restkatalysatorgehalt kleiner 100 ppm ist.

Dabei steht Alkyl für geradkettiges oder verzweigtes Alkyl.

Das monocyclische Olefin der Formel VII kann für die Zwecke der Erfindung auch substituiert sein (z. B. durch Aryl- oder Alkylreste)

Bevorzugt wird im flüssigen Cycloolefinmonomer, Cycloolefinmonomergemisch oder in konzentrierten Lösungen polymerisiert.

Bei der Polymerisationsreaktion wird mindestens ein symmetrisches, polycyclisches Olefin der Formeln I, II, III, IV, V oder VI, vorzugsweise ein symmetrisches, polycyclisches Olefin der Formeln I oder III, worin R¹, R², R³, R⁴, R⁵, R⁶, R⁷ und R⁸ gleich oder verschieden sind und ein Wasserstoffatom oder einen C₁-C₈-Alkylrest bedeuten, polymerisiert.

Gegebebenenfalls wird auch ein monocyclisches Olefin der Formel VII, worin n eine Zahl von 2 bis 10 ist, verwendet. Ein anderes Comonomer ist ein acyclisches Olefin der Formel VIII, worin R⁹, R¹⁰, R¹¹ und R¹² gleich oder verschieden sind und ein Wasserstoffatom oder einen C₁-C₈-Alkylrest bedeuten. Bevorzugt sind Ethylen oder Propylen.

Insbesondere werden Copolymere von polycyclischen Olefinen, vorzugsweise der Formeln I und III, mit den acyclischen Olefinen der Formel VIII hergestellt.

Besonders bevorzugte Cycloolefine sind Norbornen und Tetracyclododecen, wobei diese durch (C₁-C₆)-Alkyl substituiert sein können. Sie werden vorzugsweise mit Ethylen copolymerisiert; besondere Bedeutung besitzen Ethylen/Norbornen-Copolymere.

Die erfindungsgemäßen Cycloolefincopolymere werden bevorzugt dann erhalten, wenn das Verhältnis Cycloolefin zu acyclischen Olefin optimiert wird.

Ist die Konzentration des acyclischen Olefins, bei gegebener Cycloolefinkonzentration, zu hoch gewählt, sinkt der Cycloolefingehalt des Copolymers unter 50 Mol %. Der Schmelzpunkt verschiebt sich zu niedrigeren Temperaturen, bzw. verschwindet ganz.

Ist die Konzentration des acyclischen Olefins, bei gegebener Cycloolefinkonzentration, zu niedrig, sinkt insbesondere die Aktivität der Katalyse sowie das Molekulargewicht des Copolymers.

Die nach dem hier beschriebenen Verfahren hergestellten Cycloolefincopolymere enthalten das symmetrische, polycyclische Olefin der Formeln I, II, III, IV, V oder VI in einer Menge von 41 bis 59 Mol-%, bevorzugt 45 bis 55 Mol-%, besonders bevorzugt 48 bis 52 Mol-%, jeweils bezogen auf die Gesamtmenge der Monomeren. Das acyclische Olefin der Formel VIII ist in den Cycloolefincopolymeren in einer Menge von 59 bis 41 Mol-%, bevorzugt 55 bis 45 Mol-%, besonders bevorzugt 52 bis 48 Mol-% enthalten, jeweils bezogen auf die Gesamtmenge der Monomeren.

Am meisten bevorzugt sind Cycloolefincopolymere, die das symmetrische, polycyclische Olefin der Formeln I, II, III, IV, V oder VI und das acyclische Olefin der Formel VIII im molaren Verhältnis 1:1 enthalten.

Das monocyclische Olefin der Formel VII ist in den Cycloolefincopolymeren in einer Menge von unter 5 Mol-% enthalten.

Als polycyclische Olefine, monocyclische Olefine und acyclische Olefine sind auch Gemische zweier oder mehrerer Olefine des jeweiligen Typs zu verstehen. Das heißt, es können neben polycyclischen Bicopolymeren auch Ter- und Multicopolymere nach dem beschriebenen Polymerisationsverfahren hergestellt werden. Auch Copolymere der Cycloolefine der Formel VII mit den acyclischen Olefinen der Formel VIII lassen sich vorteilhaft nach dem beschriebenen Verfahren erhalten. Von den Cycloolefinen der Formel VII ist Cyclopenten, das substituiert sein kann, bevorzugt.

Die Glastemperatur der erfindungsgemäßen Cycloolefincopolymere beträgt bevorzugt 100 - 250°C, besonders bevorzugt 110 bis 220°C und insbesonders bevorzugt 120 bis 150°C.

Die Schmelztemperatur liegt bevorzugt im Bereich von 200 bis 600°C, besonders bevorzugt von 230 bis 400°C und insbesonders bevorzugt von 260 bis 300°C.

Der für das beschriebene Polymerisationsverfahren zu verwendende Katalysator besteht aus einem Aluminiumoxan und mindestens einem Metallocen (Übergangsmetallkomponente) der Formel XI 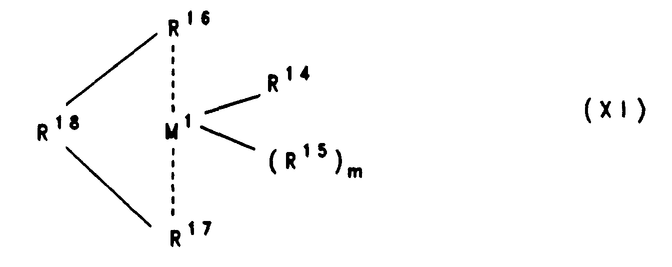 In Formel XI ist M¹ ein Metall aus der Gruppe Titan, Zirkon, Hafnium, Vanadium, Niob und Tantal, vorzugsweise Zirkon und Hafnium. Besonders bevorzugt wird Zirkon verwendet.

R¹⁴ und R¹⁵ sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor. m ist 1 oder 2.

Bevorzugt ist R¹⁶ Fluorenyl, Indenyl, Cyclopentadienyl und R¹⁷ Cyclopentadienyl und Indenyl, wobei diese Reste substituiert sein können.

Der Teil des Metallocens, der durch das Zentralatom M¹ und die Substituenten R¹⁶ - R¹⁷ gebildet wird, weist C₁-Symmetrie auf.

R¹⁸ ist eine ein- oder mehrgliedrige Brücke, welche die Reste R¹⁶ und R¹⁷ verknüpft und bedeutet vorzugsweise 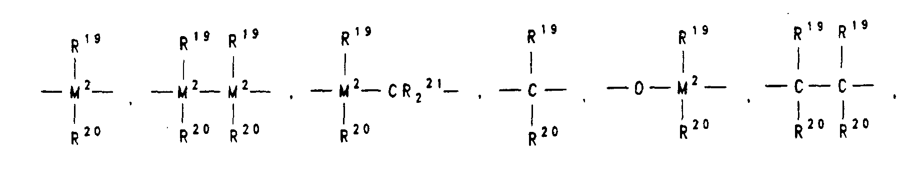 = BR¹⁹ = AIR¹⁹, -Ge-, -Sn-, -O-, -S-, = SO, = SO₂, = NR¹⁹,
= CO, = PR¹⁹ oder = P(O)R¹⁹, wobei R¹⁹, R²⁰ und R²¹
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten, oder R¹⁹ und R²⁰ oder R¹⁹ und R²¹ bilden jeweils zusammen mit den sie verbindenden Atomen einen Ring.

Bevorzugt ist R¹⁸ ein Rest 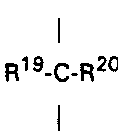 und besonders bevorzugt

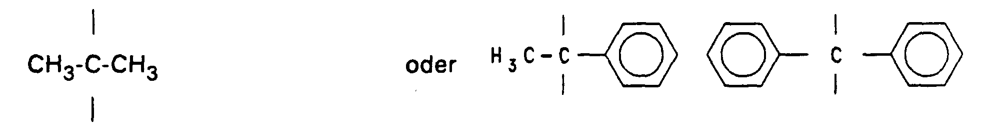

Von den Resten R¹⁹-M²-R²⁰ ist insbesondere Dimethylsilyl von Bedeutung.

M² ist Silizium, Germanium oder Zinn, bevorzugt Silizium oder Germanium, besonders bevorzugt Silizium.

Die verbrückten Metallocene können nach folgendem bekannten Reaktionsschema hergestellt werden: 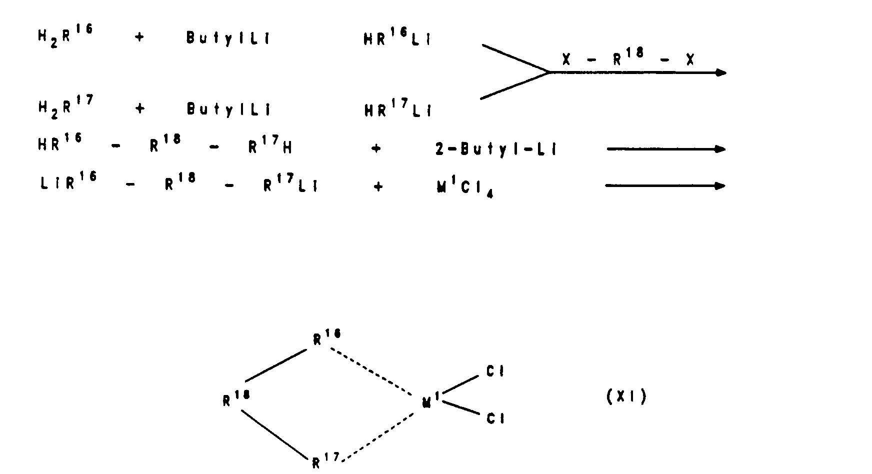 oder 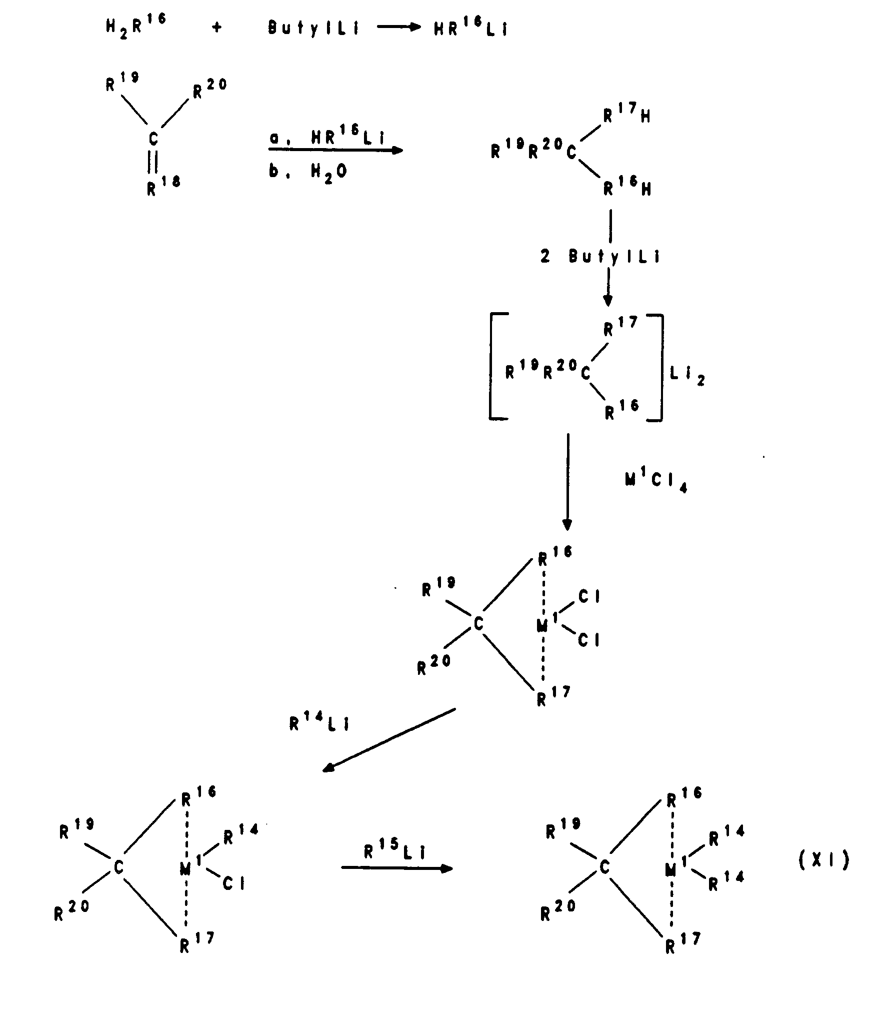 Das obige Reaktionsschema gilt auch für die Fälle R¹⁹ = R²⁰ und/oder R¹⁴ = R¹⁵ (Journal of Organometallic Chem. 288 (1985) 63-67 und EP-A 320 762).

Von den erfindungsgemäßen Metallocenen der Formel XI, welche alle in dem Teil des Moleküls, der durch das Zentralatom M¹ und die Substituenten R¹⁶-R¹⁷ gebildet wird, C₁-Symmetrie aufweisen (d. h. dieser Molekülteil weist keinerlei höhere Symmetrieelemente auf und ist nur durch eine Drehung um 360° - einzählige Achse - mit sich selbst zur Deckung zu bringen), sind besonders bevorzugt:
Isopropylen (9-fluorenyl)(1-(3-ethyl)cyclopentadienyl)zirkondichlorid,
Isopropylen-(9-fluorenyl) (1-(3-isopropyl)cyclopentadienyl)-zirkondichlorid,
lsopropylen-(9-fluorenyl) (1-(3-methyl)cyclopentadienyl)-zirkondichlorid,
Diphenylmethylen-(9-fluorenyl) (1-(3-methyl)cyclopentadienyl)-zirkondichlorid,
Methylphenylmethylen-(9-fluorenyl)(1-(3-methyl)cyclopentadienyl)-zirkondichlorid, Dimethylsilyl(9-fluorenyl)(1-(3-isopropyl)cyclopentadienyl)-zirkondichlorid,
Dimethylsilyl-(9-fluorenyl)(1-(3-methyl)cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
lsopropenyl(2,3,4,5-tetramethylcyclopentadienyl)-(1-(3-methyl)cyclopentadienyl)zirkondichlorid
   und
Isopropylen-(9-fluorenyl)(1-(3-tert.-butyl)cyclopentadienyl)-zirkondichlorid und die entsprechenden Hafniumdichloride.

Besonders bevorzugt ist:
Isopropylen-(9-fluorenyl) (1-(3-methyl)cyclopentadienyl)-zirkondichlorid,

Zur Bedeutung des Begriffs C₁-Symmetrie vgl. K. Mislow "Einführung in die Stereochemie, Verlag Chemie, 1. Auflage 1967, S. 23 f.

Allgemein bevorzugt sind Ligandsysteme (R¹⁶ - R¹⁸ - R¹⁷), die eine unterschiedliche sterische Wechselwirkung auf die Liganden R¹⁴ und R¹⁵ ausüben können. Die Natur der Liganden R¹⁴ und R¹⁵ ist dabei ohne Bedeutung.

Der Cokatalysator ist (bevorzugt) ein Aluminoxan der Formel IX und/oder der Formel X. In diesen Formeln können die Reste R¹³ gleich oder verschieden sein und bedeuten eine C₁-C₆-Alkylgruppe, vorzugsweise Methyl, Ethyl oder Isobutyl,
Butyl oder Neopentyl, oder Phenyl oder Benzyl. Besonders bevorzugt ist Methyl. n ist eine ganze Zahl von 0 bis 50, bevorzugt 5 bis 40.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z. B. Toluol) umgesetzt wird. Zur Herstellung eines Aluminoxans mit verschiedenen Alkylgruppen R¹³ werden entsprechend der gewünschten Zusammensetzung zwei verschiedene Aluminiumtrialkyle (AlR₃ + AIR'₃) mit Wasser umgesetzt (vgl. S. Pasynkiewicz, Polyhedron 9 (1990) 429 und EP-A 302 424).

Die genaue Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel IX und/oder X vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Mol-% bis zur Sättigungsgrenze, vorzugsweise von 5 bis 30 Mol-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel RₓNH₄₋ₓBR'₄ oder der Formel R₃PHBR'₄ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (EP-A 277 004).

Falls dem Reaktionsgemisch Lösemittel zugesetzt wird, dann handelt es sich um gebräuchliche inerte Lösemittel wie z. B. aliphatische oder cycloaliphatische Kohlenwasserstoffe, Benzin- bzw. hydrierte Dieselölfraktionen oder Toluol.

Die Metallocenverbindung wird in einer Konzentration, bezogen auf das Übergangsmetall, von 10⁻³ bis 10⁻⁸, vorzugsweise 10⁻⁴ bis 10⁻⁷ mol Übergangsmetall pro dm³ Reaktorvolumen angewendet. Das Aluminoxan wird in einer Konzentration von 10⁻⁴ bis 10⁻¹, vorzugsweise 10⁻⁴ bis 2 x 10⁻² mol pro dm³ Reaktorvolumen verwendet, bezogen auf den Gehalt an Aluminium. Prinzipiell sind aber auch höhere Konzentrationen möglich.

Die mittlere Molmasse des gebildeten Cycloolefincopolymers läßt sich durch Wasserstoff-Dosierung, Variation der Monomerkonzentrationen oder Variation der Temperatur in bekannter Weise steuern.

Die Polydispersität M_{w}/Mₙ der Copolymeren ist mit Werten zwischen 1,9 und 3,5 recht eng. Dadurch resultiert ein Eigenschaftbild der Polymerisate, das diese für die Faserherstellung besonders geeignet macht.

Wie durch Röntgenmessungen gezeigt werden kann, sind die nach dem erfindungsgemäßen Verfahren hergestellten Cycloolefincopolymere teilkristallin. Dabei liegt der Kristallinitätsgrad, der Cycloolefincopolymere bei 1 bis 80 %, bevorzugt bei 10 bis 50 %, besonders bevorzugt bei 15 bis 40 %.

Die erfindungsgemäßen Polymeren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Polymeren sind folgende Polymere einsetzbar: Polyethylen, Polypropylen, (Ethylen-Propylen)-Copolymere, Polybutylen, Poly-(4-methyl-1-penten), Polyisopren, Polyisobutylen, Naturkautschuk, Poly(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Um das Cycloolefincopolymer in verspinnbarer Form zu erhalten, wird im Anschluß an den Polymerisationsschritt eine spezielle Aufarbeitung des Reaktionsgemischs durchgeführt, die zur Reduktion des Restkatalysatorgehaltes dient.

Dabei ist als Restkatalysatorkonzentration ist die Konzentration der Verbindungen zu verstehen, die im Laufe der Polymerisation, der Polymerisationsstoppung und der Aufarbeitung des Reaktionsmediums entstehen und im Cycloolefinpolymer verbleiben. Es handelt sich dabei im Wesentlichen um Verbindungen des Zentralatoms der Metallocenverbindung und um Aluminiumverbindungen. Üblicherweise werden daher die Restkatalysatorgehalte in ppm Aluminium und ppm Metallocen-Metall angegeben. Da das Aluminium in einem deutlichen Überschuß (d.h. mindestens 50 fach) gegenüber dem Zentralatom eingesetzt wird, ist es zweckmäßig, die Restkatalysatorgehalte in ppm Aluminium anzugeben.

Die Restkatalysatorkonzentration hängt grundsätzlich von der bei der Polymerisation eingesetzten Menge des Metallocens und des Aluminiumalkyls pro hergestellter Polymermengeneinheit ab. Das bedeutet, daß auch die Reinheit der Monomeren sowie die der Verdünnungsmittel, aber auch die Monomerkonzentrationen, die Polymerkonzentrationen und die Katalysatoraktivität für die Restkatalysatorkonzentration entscheidend sind.

Je nach Polymerisationsprozess und Katalysatorgehalt im Reaktionsmedium kann das Reaktionsmedium unterschiedlich aufgearbeitet werden. Dabei bestimmt die Art der Aufarbeitung die Restkatalysatorkonzentration im Endprodukt.

### Variante 1:

### a) Stoppung

Nur wenn es gelingt besonders nahe Aktivitäten bezüglich des Metallocens und des Aluminiumalkyls in der Polymerisation zu erzielen, d.h. im speziellen die Katalyse unter Einsatz geringster Mengen Aluminiumalkyl (< 500 ppm) zu führen, kann nach Variante 1 verfahren werden.
Die Polymerisationsstoppung wird in einem dem Polymerisationsreaktor nachgelagerten Gefäß durch Zugabe eines Stoppers unter Rühren durchgeführt. Der Stopper ist eine chemische Verbindung, die mit dem Metallocen und/oder dem Aluminiumalkyl reagiert und damit diese(s) in eine unreaktive Form überführt. Bevorzugt werden in dieser Variante Stopper gewählt, die durch Reaktion mit dem Metallocen und/oder dem Aluminiumalkyl zu Verbindungen führen, die in wässrigen oder alkoholischen oder ketonischen Lösungen löslich sind und dadurch während des Fällprozesses vom Cycloolefincopolymer getrennt werden. Besonders bevorzugt werden Isopropanol, Methanol, Ethanol, tert.-Butanol als Stopper eingesetzt.

Entstehen aus Metallocen und Aluminiumalkyl mit dem Stopper flüchtige Verbindungen, so kann bevorzugt eine Reduzierung des Katalysatorrestgehaltes während einer Hochtemperaturaufarbeitung, wie Flashverfahren, Dünnschichtverdampfung oder Endgasungsextruder, zusammen mit dem Lösungsmittel erfolgen.

### b) Fällung

Das gestoppte Reaktionsmedium kann einer Fällung zugeführt werden. Bevorzugte Fällungsmittel sind Alkohole, Ketone, Ester und diese enthaltende Mischungen. Besonders bevorzugt werden als Fällungsmittel Methanol, Ethanol, Aceton, Essigsäureethylester oder Gemische, die zu über 50 Vol.-% aus diesen Verbindungen bestehen, eingesetzt. Anschließend wird das gefällte Polymer beispielsweise mit einer wässrigen, alkoholischen oder ketonischen Lösung mindestens einmal gewaschen. Bei dieser Wäsche dürfen im Gegensatz zu der Beschreibung aus EP 503422 auf keinen Fall Lösungen eingesetzt werden, die HCI oder sonstige chlorhaltige Verbindungen enthalten. Extrusions- und Spinnversuche haben gezeigt, daß Cycloolefinpolymeren, die mit HCI-haltigen Lösungen gewaschen wurden, sich bei Verarbeitungstemperaturen besonders stark verfärben, Stippen ausbilden bzw. lokale Veränderungen erfahren, die sich auf die Verarbeitung und die Eigenschaften dieser Produkte negativ auswirken. Es wird vermutet, daß diese verstärkten Veränderungen auf die Bildung von verschiedenen Aluminiumchloriden zurückzuführen sind, die für ihre verändernde Wirkung bei hohen Temperaturen auf Kohlenwasserstoffe bekannt sind. Danach wird das gewaschene Produkt möglichst unter Ausschluß von Sauerstoff, bevorzugt unter Stickstoff bei erhöhter Temperatur getrocknet. Bevorzugterweise wird zwischen 40°C unterhalb der entsprechenden Glastemperatur (Tg) des Polymers und 300°C, besonders bevorzugt zwischen 10°C unterhalb Tg und 200°C getrocknet.

### c) Aufkonzentrierung

Das gestoppte Reaktionsmedium kann aber auch direkt oder über eine weitere Zwischenstufe einer Aufkonzentrierung des Reaktionsmediums zugeführt werden. Die Aufkonzentrierung erfolgt in einem üblichen ein oder zweistufigen Verdampfungsprozess mit Hilfe von Flashapparaturen oder Dünnschichtverdampfern oder einer Kombination beider. Im Falle der Kombination ist der zweite bzw. letzte Apparat ein Dünnschichtverdampfer. Das mit dieser Methode aufgearbeitete Produkt fällt als Polymerschmelze an, die direkt nach üblichen Verfahren granuliert werden kann.

Eine Zwischenstufe vor der Aufkonzentrierung kann z. B. ein Waschprozess mit einem wässrigen Waschmedium sein. Das Reaktionsmedium, das mit der Waschlösung eine zweiphasige Mischung bildet, wird mit der Waschlösung gemeinsam gerührt und anschließend dekantiert. Wichtig ist dabei, daß die Hydrophylie der wässrigen Lösung so eingestellt ist, daß bei der Wäsche des Reaktionsmediums kein Polymer in die wässrige Phase übergeht. Bevorzugt Waschmedien sind alkalische oder chlorfreie saure wässrige oder auch alkoholhaltige Lösungen. Besonders bevorzugt werden dabei NaOH-, Soda,Essigsäure-, Schwefelsäurelösungen.

### Variante 2:

Diese Variante wird gegenüber Variante 1 bevorzugt, weil sie auch bei höheren Katalysatorkonzentrationen, insbesondere Aluminiumalkylkonzentration über 500 ppm, im Reaktionsmedium anwendbar ist. Die Variante 2 ist dadurch gekennzeichnet sein, daß das teilkristalline Cycloolefinpolymer in gelöster Form mindestens einmal durch ein Filtermedium fließt. So werden Restkatalysatorgehalte im polymeren Endprodukt unabhängig von den Katalysatorkonzentrationen im Reaktionsmedium kleiner 100 ppm Aluminium erreicht.

Bei einer Aufarbeitung mit einem solchen Filtrationsschritt kann je nach Art der Polymerisation wiederum unterschiedlich verfahren werden.

### Variante 2.1. (Polymerisation ohne Partikelbildung)

Verwendet man während der Polymerisation ein Lösungsmittel zur Verdünnung des Reaktionsmediums, in dem sich das Polymer gut löst, bevorzugt Decalin, eine hydrierte Dieselölfraktion mit einem Siedepunkt zwischen 120 und 160°C oder Cyclohexan, in einem Verhältnis Lösungsmittel zu Cycloolefin von 4:1 bis 1:10, und/oder eine relativ hohe Polymerisationstemperatur, bevorzugt 50 bis 150°C, so kann man ein Ausfallen des teilkristallinen Polymers in Form von Partikeln weitgehend vermeiden. Ab einer Polymerkonzentration von 5 % ist eine Gelbildung möglich, die, wenn sie stattfindet, beispielsweise einen Verkürzung der Polymerisationszeit oder eine weitere Erhöhung der Polymerisationstemperatur notwendig macht.

### a) Stoppung

Verläuft die Polymerisation, ohne daß dabei das Polymer in einer heterogenen Partikelform ausfällt, die eine einfache mechanische Abtrennung des ausgefällten Polymer von dem Reaktionsmedium ermöglichen würde, wird das Reaktionsmedium auf mindestens 130°C erwärmt. Die Temperatur wird dabei so hoch gewählt, daß sichergestellt ist, daß das Polymer vollständig gelöst ist. Um die vollständige Auflösung zu begünstigen kann ein zusätzliches Lösungsmittel zugegeben werden. Bevorzugt werden hydrierte Dieselfraktionen, Dekalin, Toluol, Cyclohexan, Chlorbenzol, Dichlorbenzol, Chlornaphthalin und Naphthalin. Besonders bevorzugt sind Decalin und Cyclohexan. Bevorzugte Stopper sind bei diesem Verfahren solche Verbindungen, die mit dem Metallocen und/oder dem eingesetzten Aluminiumalkyl reagieren und dabei eine unlösliche Verbindung ergeben. Besonders bevorzugt sind Wasser, organische mono-, di- und multi-Carbonsäuren, Di- oder Polyole.

Anschließend wird in dem Reaktionsgemisch, welches verdünnt sein kann und in dem das Polymer vollkommen gelöst vorliegt, eine im Reaktionsmedium nicht lösliche, pulverförmige, organische oder anorganische Substanz suspendiert. Die Suspension wird mindestens 10 Minuten lang innig vermengt. Bevorzugt werden Materialien, die als Filterhilfsmittel eingesetzt werden, sowie polare Substanzen die bevorzugt OH-Gruppen auf ihrer Partikeloberfläche tragen. Besonders bevorzugt sind verschiedene Arten von Diatomeenerde, Perlite, verschiedene Cellulosearten und Cellulosederivate. Diese unlöslichen Substanzen können auch gleich mit dem Stopper dem Reaktionsmedium zugeführt werden, so daß Stoppung und Suspendierung gleichzeitig erfolgen.

### b) Filtration

Die Suspension wird dann über eine Filtrationsschicht bei bevorzugterweise gleichbleibender Temperatur filtriert. Als Filterschicht können verschiedene Ein- und Mehrschichtfilter bestehend aus Filtergeweben und/oder Filtervliesen und/oder Filterhilfsmittelschichten bestehen, die in mindestens einer Schicht eine Porosität aufweisen, die kleiner ist als die mittlere Größe der in dem Reaktionsmedium suspendierten Partikel. Bevorzugt werden mittlere Porositäten, die um den Faktor 2 bis 20, insbesondere um den Faktor 3 bis 10 kleiner sind als die mittlere Partikelgröße der Suspendierten Substanz.

Die so erhaltene Polymerlösung kann entweder durch Fällung oder durch Aufkonzentrierung gemäß der Variante 1 weiter aufgearbeitet werden.

### Variante 2.2. (Polymerisation mit Partikelbildung)

Verwendet man während der Polymerisation ein Lösungsmittel zur Verdünnung des Reaktionsmediums, in dem sich das Polymer schlecht löst, bevorzugt Hexan, Pentan, n-Butan, iso-Butan oder Propan in einem Verhältnis Lösungsmittel zu Cycloolefin von 4:1 bis 0:1 und/oder eine Polymerisationstemperatur zwischen -70 und 150°C, bevorzugt zwischen 10 und 90°C, so kann man ein Ausfallen des teilkristallinen Polymers in Form von Partikeln weitgehend sicherstellen. Das Reaktionsmedium wird dadurch zu einer Suspension. Diese Polymerisationsmethode ist der Verfahrensvariante, wo keine Polymerpartikel während der Polymerisation ausfallen, vorzuziehen. Es wird dabei die Begrenzung durch eine mögliche Vergelung oder Belagsbildung vermieden.

Ist das Cycloolefin für das Cycloolefinpolymer ein schlechtes Lösungsmittel, so daß eine Partikelbildung auch ohne Zusatz schlechter Lösungsmittel erfolgt, ist eine Polymerisation in reinem Cycloolefin vorzuziehen.

Verläuft die Polymerisation so, daß dabei das Polymer in einer heterogenen Partikelform ausfällt, wird eine einfache mechanische Abtrennung des ausgefällten Polymer von dem Reaktionsmedium ermöglicht. Ein solcher Verfahrensschritt kann bereits beträchtliche Mengen Metallocen und Aluminiumalkyl, die in gelöster Form vorliegen können, von dem aufzuarbeitenden Produkt abtrennen und dadurch alle weiteren Reinigungsschritte entlasten oder vereinfachen. Eine solche Abtrennung der ausgefallenen Polymerpartikel von dem restlichen Reaktionsmedium kann in einer üblichen Filtration bestehen oder mit Hilfe üblicher Zentrifugierverfahren durchgeführt werden. Das polymerfreie Reaktionsmedium kann der Polymerisation wieder zugeführt werden. Um eine solche Rückführung ohne Beeinträchtigung der Katalyse sicherzustellen, muß die Entnahme des Polymers aus dem Filter oder aus der Zentrifuge unter Inertbedingungen erfolgen. Der Vorteil dieser Abtrennung besteht unter anderem darin, daß die Restmonomeren bei dem anschließenden Lösungsprozess nicht mehr auf höhere Temperaturen erhitzt werden müssen, wobei Nebenreaktionen, Verkräckungen, Stippenbildungen auftreten können, die alle sowohl auf die globale Monomerausbeute wie auch auf die Einheitlichkeit und Reinheit des polymeren Endprodukts einen negativen Einfluß haben.

Das abgetrennte Polymer wird dann in einem Lösungsmittel bei erhöhter Temperatur gelöst. Es werden Lösungstemperaturen von 130 bis 200°C bevorzugt. Die Temperatur wird dabei so hoch gewählt, daß sichergestellt ist, daß das Polymer vollständig gelöst wird. Als Lösungsmittel werden hydrierte Dieselfraktionen, Dekalin, Toluol, Cyclohexan, Chlorbenzol, Dichlorbenzol, Chlornaphthalin und Naphthalin bevorzugt. Besonders bevorzugt sind Decalin, Chlorbenzol, Dichlorbenzol und Cyclohexan. Diese Lösung kann analog der unter Variante 2.1. beschriebenen Vorgehensweise mit Stopper und unlöslichen Substanzen versetzt, heiß filtriert und anschließend mittels der unter Variante 1 beschriebenen Fällung oder Aufkonzentrierung weiter aufgearbeitet werden.

Das erfindungsgemäße Aufarbeitungsverfahren ist auch über die hier beschriebenen Katalysatorsysteme (Metallocene und Aluminiumalkyle) hinaus zur Abtrennung anderer zur Cycloolefinpolymerisation verwendbarer Katalysatorsysteme (z.B. Ziegler-Katalysatoren) anwendbar.

Die erfindungsgemäß aufgearbeiteten Cycloolefincopolymere eignen sich besonders zur Herstellung von Fasern. Die Fasern können nach üblichen technischen Verfahren aus der Schmelze gesponnen werden. Die Spinnlösung als auch die Polymerschmelze kann durch eine weiteren Filtration noch zusätzlich von Partikeln und Gelteilchen befreit werden.

Liegt der Schmelzpunkt des Cycloolefincopolymers über 300°C kann das Polymer mit hochsiedenden Kohlenwasserstoffen angeteigt werden um die Verarbeitbarkeit zu verbessern.
Bei einem Schmelzspinnverfahren wird das Polymer in einem Ein- oder Zweischneckenextruder oder einem Kolbenextruder aufgeschmolzen. Das Aufschmelzen im Kolbenextruder kann durch Beheizen des Zylinders erfolgen. Eine weitere Möglichkeit besteht darin, das Polymer gegen ein beheiztes Gitter zu pressen, wobei das Polymer aufschmilzt. Die Polymerschmelze durchströmt darauf einen Spinnkopf mit einem oder mehreren Spinndüsen. Die Faser, bzw. die Filamente, werden vorzugsweise bei erhöhter Abzugsgeschwindigkeit auf Spulen gewickelt.

Die schmelzegesponnene Faser wird bevorzugt unter Erhitzen nachverstreckt. Dabei wird die Faser durch eine oder mehrere Heizzonen geführt, wobei unterschiedliche Streckbedingungen eingestellt werden können. Vorzugsweise werden hohe Streckverhältnisse angewendet, wodurch die Kristallinität der Faser noch weiter erhöht wird.

Die Faser, bzw. die Filamente werden in der Regel verstreckt, um hohe mechanische Festigkeit und hohe Elastizitätsmodule zu erzielen. Das Verstreckverhältnis beträgt üblicherweise 1,1 bis 50, vorzugsweise 1,5 bis 30, besonders bevorzugt 2 bis 10.

Das Strecken kann in einem einzigen Schritt, in zwei oder auch mehreren Schritten durchgeführt werden. Weiterhin können die Fasern, bzw. Filamente einer Wärmebehandlung bei gleich oder höherer Temperatur unterworfen werden, um die Kristallinität zu erhöhen. Die Wärmeübertragung kann mit einer Heizplatte (auch gekrümmt) oder zylindrischer Vorrichtungen erfolgen.

Die Verstrecktemperaturen liegen vorteilhaft zwischen Glastemperatur und Schmelztemperatur. Für erfindungsgemäße Cycloolefin-Copolymer wird die erste Verstreckung bei Temperaturen zwischen 100 und 500°C, bevorzugt zwischen 120 und 300°C.

Eine anschließende thermische Nachbehandlung bei gleicher oder höherer Temperatur als der Verstrecktemperatur unter Anlegen einer geringen Zugspannung dient der Fixierung der Faser. Dadurch wird eine Schrumpfneigung bei höherer Temperaturen gemindert.

Die Spinngeschwindigkeit kann bis zu 5000 m/min. oder höher betragen. Dabei können hochorientierte "as spun yarns" erhalten werden, für die nur eine geringe Nachverstreckung notwendig ist. Die Verstreckung der Fasern richtet sich nach der gewünschten Reißdehnung, wobei in der Regel so verstreckt wird, daß Reißdehnungen von 2-50%, bevorzugt 10-40%, besonders bevorzugt 15-30% erhalten werden.

Die verstreckten Fasern weisen Reißfestigkeiten von 70 bis 1000 MPa, bevorzugt 200 bis 800 MPa, besonders bevorzugt 300 bis 500 MPa auf. Der Titer der Faser liegt im Bereich von 0.01 bis 100 g/km, bevorzugt von 0.05 bis 20 g/km, besonders bevorzugt 0.2 bis 10 g/km. Der Modul liegt im Bereich von 2 bis 20 GPa, bevorzugt 5 bis 10 GPa, besonders bervorzugt 6 bis 8 GPa.

Die erfindungsgemäße Faser kann beispielsweise eingesetzt werden als technische Faser, Gewebe für den Textilbereich und technischen Bereich oder Vlies. Es können Filamente, Multifilamente, Seile, Taue hergestellt werden. Hervorzuheben ist die hervorragende Hydrolyse- und UV-Beständigkeit. Ebenso ist die gute Festigkeit bei erhöhter Temperatur zu erwähnen.

Die in den folgenden Beispielen angegebenen Glastemperaturen Tg wurden mittels DSC (Differential Scanning Calorimetry) bei einer Aufheizrate von 20°C/min bestimmt. Die angegebenen Viskositätszahlen wurden gemäß DIN 53 728 ermittelt.

Der Restkatalysatorgehalt wurde bestimmt als Aluminiumgehalt durch Röntgenfluoreszensspektroskopie.

Der Norbornengehalt im Cylcoolefincopolymer wurde durch quantitative ¹³C-NMR-Spektroskopie bestimmt.

### Beispiel 1

Ein 75-dm³-Reaktor wurde mit Ethylen gefüllt und mit 15 dm³ Norbornen und 15 dm³ Decalin gefüllt. Durch mehrfaches Aufdrücken von Ethylen (6 bar) wurde die Lösung mit Ethylen gesättigt. Es wurde ein Druck von 2,5 bar (Überdruck) eingestellt, 500 cm³ toluolische Methylaluminoxanlösung (10,1 Gew.-proz. Methylaluminoxan der Molmasse 1300 g/mol nach kryoskopischer Bestimmung) in den Reaktor gegeben und 15 min bei 70 °C gerührt. Eine Lösung von 150 mg lsopropylen-(9-fluorenyl)(1-(3-methyl)cyclopentadienyl)zirkondichlorid in 500 cm³ toluolischer Methylaluminoxanlösung wurde nach 15 minütiger Voraktivierung zugegben. (Zur Molekulargewichtsregelung kann Wasserstoff vor der Katalysatorzugabe zudosiert werden).

Unter Rühren (750 UPM) wurde bei 70 °C polymerisiert, wobei der Ethylendruck durch Nachdosieren bei 2,5 bar gehalten wurde.

In einem zweiten Rührkessel (150 dm³) wurden 50 l Decalin gefüllt und darin 500 g Diatomeenerde (^{(R)}Celite) suspendiert. In der Mischung wurden 200 ml Wasser dispergiert. Das Wasser wird dabei von der Diatomeenerde absorbiert.

Der Suspension wurden 0,5 g Antioxidans (Hostanox SE 10) und 0,5 g Peroxidzersetzer (Hostanox 03) zugesetzt und auf 90 °C temperiert.

Nach 60 min. Reaktionszeit wurde die Reaktionslösung schnell in den zweiten Rührkessel abgelassen. Unter Rühren wurde auf 170 °C erhitzt. Dabei wurden ca. 2 bar Druck erreicht wurden.

Auf dem Filtergewebe (Seitzfilter T 5500) einer 120 l Drucknutsche wurde ein Filterkuchen aus 500 g Celite, suspendiert in 10 1 einer hydrierten Dieselölfraktion, aufgebaut und die Nutsche anschließend auf 160 °C temperiert.

Die Polymerlösung wurde über die Drucknutsche filtriert. Dabei wurde so verfahren, daß das Filtrat zunächst 15 min in die Nutsche zurückgefördert wurde (d. h. im Kreis gepumpt wurde). Über der Lösung wurde ein Druck von 2,8 bar Stickstoff aufgebaut.

Die Polymerlösung wurde anschließend mittels eines Dispergators (^{(R)}Ultraturrax) in 500 l Aceton eingerührt und dabei gefällt. Die Acetonsuspension wurde über eine 680 l Rührdrucknutsche bei geöffnetem Bodenventil im Kreis gefördert. Nach Schließen des Bodenventils wurde filtriert. Der polymere Feststoff wurde dreimal mit Aceton gewaschen. Der letzten Wäsche wurden 50 g Stabilisator (1 g Irganox 1010) zugesetzt.

Danach wurde das Aceton vollständig abgedrückt und das Produkt bei 100 °C drei Stunden vorgetrocknet. Die Endtrocknung erfolgt 10 Stunden bei 10 mbar und 160 °C bei schwacher Stickstoffüberlagerung im Trockenschrank.

Es wurden 2100 g farbloses pulverförmiges Polymer erhalten. Die Glastemperatur Tg betrug 126 °C und die Schmelztemperatur Tm 284 °C. Die Viskositätszahl wurde nach einstündigem Lösen bei 180 °C bei 135 °C mit 59 ml/g gemessen. Der Restkatalysatorgehalt betrug 18 ppm.

### Beispiel 2 (Vergleichsbeispiel)

Ein 1,5-dm³-Reaktor wurde mit Ethylen gefüllt und mit 600 cm³ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 0,5 bar (Überdruck) eingestellt, 5 cm³ toluolische Methylaluminoxanlösung (10,1 Mol-% Methylaluminoxan der Molmasse 1300 g/Mol nach kryoskopischer Bestimmung) in den Reaktor gegeben und 15 min bei 70°C gerührt. Eine Lösung von 5 mg Isopropylen-(9-fluorenyl)(1-(3-methyl)-cyclopentadienyl)zirkondichlorid in 5 cm³ toluolischer Methylaluminoxanlösung wurde nach 15 minütiger Voraktivierung zugegeben. (Zur Molekulargewichtsregelung kann Wasserstoff vor der Katalysatorzugabe zugegeben werden).

Unter Rühren (750 UPM) wurde eine Stunde bei 40°C polymerisiert, wobei der Ethylendruck durch Nachdosieren bei 2 bar gehalten wurde.

Die Reaktionslösung wurde in ein Gefäß abgelassen und schnell in 5 dm³ Aceton eingetropft, 10 min gerührt und anschließend filtriert.

Der erhaltene Feststoff wurde mehrfach mit 10 %iger Salzsäure und Aceton im Wechsel gewaschen. Es wurde neutral gewaschen und nochmals mit Aceton gerührt. Das erneut filtrierte Polymer wurde bei 80°C und einem Druck von 0,2 bar 15 Stunden getrocknet.

Es wurden 54 g eines farblosen Polymers erhalten. Es wurde eine Viskositätszahl VZ von 131 cm³/g und eine Glastemperatur Tg von 133°C gemessen. Das Norbornen/Ethylen-Einbauverhältnis ist gemäß NMR-Spektrum ca. 50 Mol-% Norbornen zu 50 Mol-% Ethylen. Der Restkatalysatorgehalt betrug 315 ppm.

### Beispiele 3 bis 8

Die Polymerisationen wurden analog Beispiel 1 durchgeführt, wobei die Ethylenüberdrucke die Katalysatormenge und die Reaktionszeit gemäß Tabelle 1 variiert wurden.

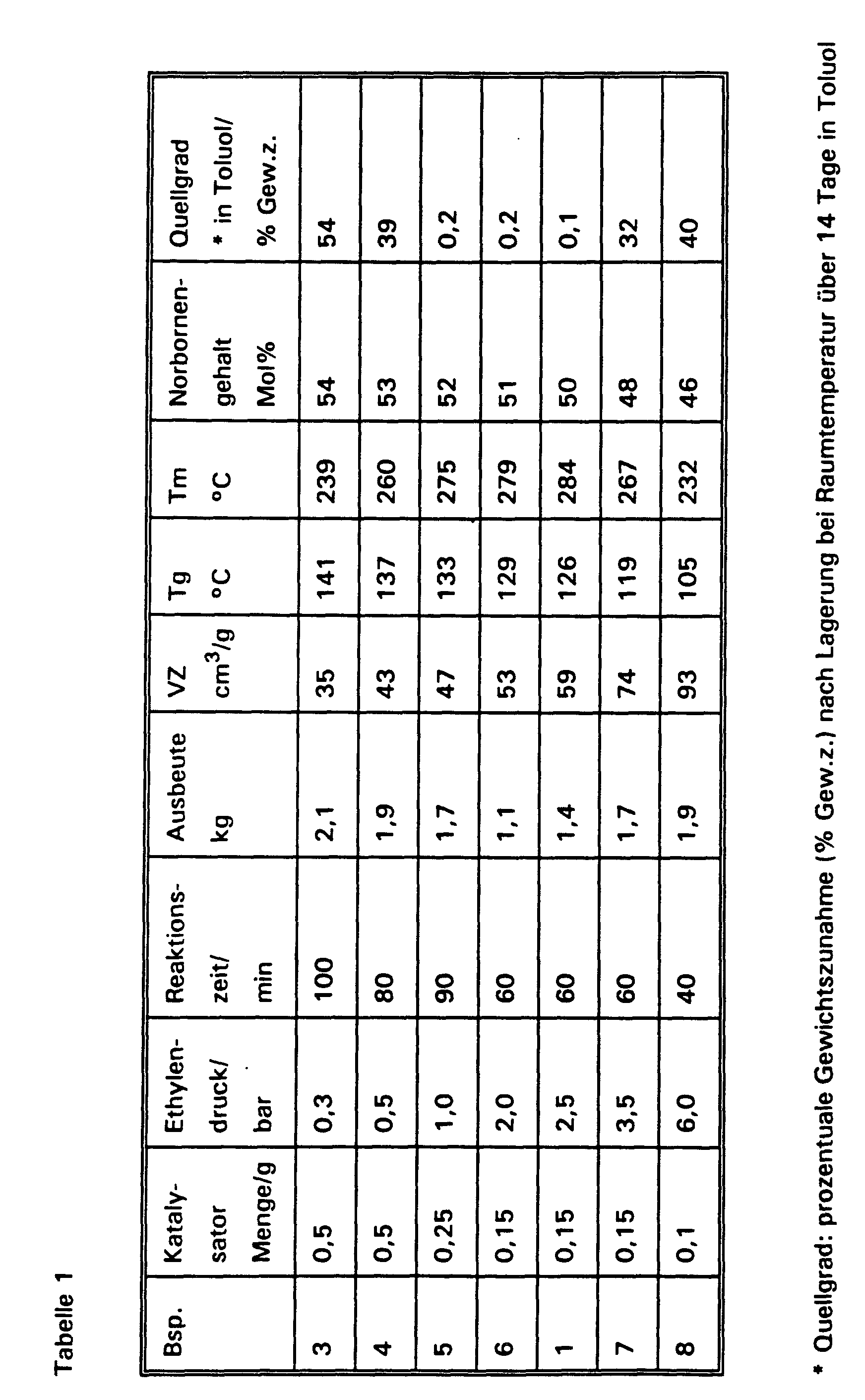

### Beispiel 9

Ein 1,5 dm³-Reaktor wurde mit 600 ml 5-Methylnorbornen gefüllt. Es wurden 5 cm³ toluolische Methylaluminoxanlösung (10 Mol-% Methylaluminoxan der Molmasse 1300 g/Mol nach kryoskopischer Bestimmung) in den Reaktor gegeben und durch mehrmaliges Aufdrücken von Ethylen (6 bar) mit Ethylen gesättigt und 15 min gerührt.
Die Temperatur wurde auf 70 °C eingestellt und der Druck auf 2 bar (Überdruck) eingestellt.

Eine Lösung von 2 mg Isopropylen-9-fluorenyl) (1(3-methyl)cyclopentadienyl)zirkondichlorid in 5 cm³ toluolischer Methylaluminoxanlösung wurden in den Reaktor gegeben.

Unter Rühren wurde eine Stunde bei 70 °C polymerisiert. Der Ethylendruck wurde durch Nachdosieren bei 2 bar konstant gehalten.

Die Reaktionslösung wurde in ein Gefäß abgelassen.

Es wurde mit 10 g Diatomeenerde versetzt, welche in 200 ml Toluol suspendiert und mit 5 ml Wasser angefeuchtet wurde.

Die Mischung wurde 20 Minuten gerührt und über eine 3 dm³-Drucknutsche filtriert. Die klare Lösung wurde in 5 dm³ Aceton eingetragen. Das gefällte Produkt wurde abfiltriert und dreimal mit Aceton gewaschen. Anschließend wurde bei 100 °C und 0,2 bar 15 Stunden getrocknet.

Es wurden 26 g farbloses Polymer erhalten. Die Viskositätszahl betrug 64 cm³/g und die Glastemperatur betrug 149 °C. In der DSC konnte keine Schmelztemperatur und keine Kristallisation nachgewiesen werden. Laut ¹³C-NMR enthält das Polymer 49 Mol% 5 Methyl-norbornen.

### Beispiel 10

### Herstellung der Probekörper

Polymere, hergestellt gemäß Beispiel 1, wurden durch 15 Minuten Pressen bei 300 °C und 10 bar Druck zu Platten gepresst. Anschließend wurde unter 10 bar Druck mit 20 K/min auf 100 °C gekühlt, dann die Platten der Filmpresse entnommen. Die so erhaltenen runden Platten hatten einen Durchmesser von 60 mm bei einer Dicke von 1 mm.

### Beispiel 11

### Versuche zur Lösungsmittelfestigkeit

Die Preßplatten aus Beispiel 10 wurden gewogen und das Gewicht M1 bestimmt. Anschließend wurden die Pressplatten in Toluol, Cyclohexan, Hexan, Chloroform und Dichlormethan bei Raumtemperatur 24 Stunden gelagert. Anschließend wurden die Platten durch kurzes Eintauchen in Pentan gewaschen. Anhaftendes Lösungsmittel verdampfte innerhalb weniger Minuten. Durch erneutes Wiegen (Gewicht M2), spätestens 3 Minuten nach der Pentan-Wäsche, und Differenzbildung (M2-M1) wurde die prozentuale Masseänderung ermittelt. [(M2/M1-1)100 = M in %]. Die Ergebnisse sind in Tabelle 2 aufgeführt.

**Tabelle 2**

| Lösungsmittel | M [%] |
|---|---|
| Toluol | + 0.1 |
| Cyclohexan | + 0.1 |
| Hexan | +/- < 0.1, d. h. 0 |
| Dichlormethan | + 0.8 |
| Chloroform | + 1.1 |

### Beispiel 12

Die Polymere aus Beispiel 3 bis 8 wurden ebenfalls gemäß Beispiel 10 zu Preßplatten verarbeitet.
Gemäß Beispiel 11 wurde die Lösungsmittelfestigkeit in Toluol untersucht, wobei die Lagerzeit in Toluol 14 Tage betrug.

Die Gewichtsänderung der Probe ist in Tabelle 1 aufgeführt.

Man findet, daß besonders geringe Quellgrade gefunden werden, wenn die Schmelztemperaturen der teilkristallinen Cycloolefincopolymere über 267°C liegen und der Norbornengehalt ca. 50 Mol % beträgt.

### Beispiel 13

Die spezifische Dichte der Preßplatten aus Beispiel 10 wurde bestimmt. Die Bestimmung erfolgte mittels Auftrieb methode. Die spezifische Dichte betrug 1,032 g/cm³.

Eine gemäß Beispiel 10 hergestellte Preßplatte wurde nach dem Aufschmelzen bei 300 °C in Eiswasser abgeschreckt. Die spezifische Dichte betrug 1,018 g/cm³.

### Beispiele 14 bis 17

Das Polymer aus Beispiel 1 wurde bei 280°C unter Vakuum zu einem Stab verpreßt. Dieser Stab wurde in einen Einkolbenextruder eingesetzt und gegen ein beheiztes Gitter (T₁; Tab. 1) gepreßt, wobei das Polymer aufschmolz. Die Schmelze durchfloß ein Metallfilter (Sintermetall, Feinheit 5*µ*m) (T₂, Tab. 1) und passierte anschließend eine Einlochspinndüse (Maße der Kapillare: Durchmesser 50 *µ* m, Länge 70 *µ*m). Die Schmelze hatte dabei die Temperatur T₃ (Tab.1). Der Durchfluß (Tab. 1) wurde durch Änderung des Kolbenvorschubs variiert. Weiterhin wurde die Abzugsgeschwindigkeit (Tab. 1) der Schmelze von der Düse variiert.

Von den Fasern wurden Zug/Dehnungsdiagramme (Instron) aufgenommen (Tabelle 2). Es wurde der Elastizitätsmodul, die Reißfestigkeit und Dehnung bei Abriß bestimmt.

Der Titer der Faser wurde durch genaues Auswiegen einer definierten Länge eines Fadens bestimmt.

### Beispiele 18 bis 20

Die nach Beispiel 15 und 17 erhaltenen Filamente (Spinnfaden, Tab. 3) wurden mit Hilfe einer zweistufigen Verstreckapparatur verstreckt und orientiert.

Das Filament wurde von der Faserspule (Rolle 1, Tabelle 3) abgerollt und von einer, mit höherer Geschwindigkeit laufenden, zweiten Rolle (Rolle 2, Tabe. 3) aufgenommen. Die Faser durchläuft dabei eine Heizzone (gekrümmte heiße Platte) (Temperatur 140°C), wobei sie verstreckt wurde. Von Rolle 2 passiert die Fasereine zweite Heizzone (Temperaturca. 190°C), die der Fixierung dient,wonach sie erneut auf einer Faserspule (Rolle 3, Tab. 3) aufgenommen und dabei nochmals leicht verstreckt wurde.

Es wurden ebenfalls Zug/Dehnungskurven gemessen (Tabelle 4)

**Tabelle 1**

| Beispiel | T₁ °C | T₂ °C | T₃ °C | Abzuggeschw. m/min | Düsendurchfluß g/min |
|---|---|---|---|---|---|
| 14 | 300 | 284 | 289 | 750 | 0,3 |
| 15 | 300 | 284 | 289 | 75 | 0,4 |
| 16 | 291 | 280 | 279 | 600 | 0,13 |
| 17 | 291 | 280 | 279 | 25 | 0,14 |

**Tabelle 2**

| Beispiel | Titer g/km | Reißfestigkeit MPa | Reißdehnung % | Modul GPa |
|---|---|---|---|---|
| 14 | 0,39 | 118 | 74 | 3,2 |
| 15 | 5,5 | 64 | 2,3 | 2,9 |
| 16 | 0,22 | 136 | 91 | 3,3 |
| 17 | 5,6 | 64 | 2,3 | 2,9 |

**Tabelle 3**

| Beispiel | Rohfaser aus Bsp. | Rolle 1 m/min | Rolle 2 m/min | Rolle 3 m/min | Verstreckverhältnis Rolle 3/Rolle 1 |
|---|---|---|---|---|---|
| 18 | 15 | 5 | 18,3 | 20,6 | 4,1 |
| 19 | 16 | 5 | 19,4 | 21,6 | 4,3 |
| 20 | 17 | 5 | 19,4 | 25,1 | 5,0 |

**Tabelle 4**

| Beispiel | Titer g/km | Reißfestigkeit MPa | Reißdehnung % | Modul GPA |
|---|---|---|---|---|
| 18 | 1,4 | 310 | 18 | 6,5 |
| 19 | 1,4 | 300 | 25 | 6,1 |
| 20 | 1,1 | 360 | 9 | 7,2 |

### Beispiel 21 (Suspensionspolymerisation)

Ein 1,5 dm³-Reaktor wurde mit Ethylen gefüllt. Es wurden 500 cm³ Norbornenschmelze, 500 cm³ Hexan und 5 cm³ toluolische Methylaluminoxanlösung eingefüllt und 15 min bei 50°C gerührt. Der Ethylendruck wurde auf 2,3 bar und die Temperatur auf 70°C eingestellt. Es wurden 10 mg lsopropylen(9fluorenyl)(1-(3-methyl)cyclopentadienyl)zirkondichlorid in 5 cm³ tol. Methylaluminoxanlösung gelöst und ebenfalls in den Reaktor gegeben.

Es wurde 60 Minuten bei 70°C polymerisiert, wobei der Ethylendruck konstant gehalten wurde. Anschließend wurde die Suspension in ein Gefäß abgelassen und ohne weitere Behandlung über eine Glasfilternutsche filtriert. Der Feststoff wurde mit Hexan gewaschen und getrocknet.

Der Feststoff wurde in 500 cm³ Decalin suspendiert, mit 5 g ®Celite und 2 cm³ Wasser versetzt und unter Rühren auf 170°C erhitzt. Die Suspension wurde bei 170°C über eine 3 dm³ Drucknutsche (Filtergewebe: Seitzfilter T5500) filtriert. Die erhaltene Lösung wurde schnell unter intensivem Rühren in 5 dm³ Aceton dispergiert. Der Feststoff wurde filtriert und mehrfach in 2 dm³ Aceton dispergiert und gewaschen. Das polymere Produkt wurde bei 0,2 bar und 100°C 15 Stunden vorgetrocknet und 2 Stunden bei 160°C und 0,1 mbar nachgetrocknet.

Es wurden 78 g Polymer erhalten. Die Glastemperatur betrug 128°C, die Schmelztemperatur 284°C.

Der geöffnete Polymerisationsreaktor wies keine Wandbeläge auf.

### Beispiel 22 (Vergleichbeispiel zu den Beispielen 14 bis 17)

Das Polymer aus Beispiel 2 wurde wie in den Beispielen 14 - 17 beschrieben in die Verspinnapparatur gebracht. Verspinnversuche führten jedoch nicht zum Erfolg, da die Filamente abrissen.

## Patentansprüche

1. Verfahren zur Herstellung einer Faser aus Cycloolefincopolymer, wobei das Cycloolefincopolymer hergestellt wird durch Polymerisation von 30 bis 99,9 Gew.-%, bezogen auf die Gesamtmenge der Monomeren, mindestens eines symmetrischen, polycyclischen Olefins der Formeln I, II, III, IV, V oder VI 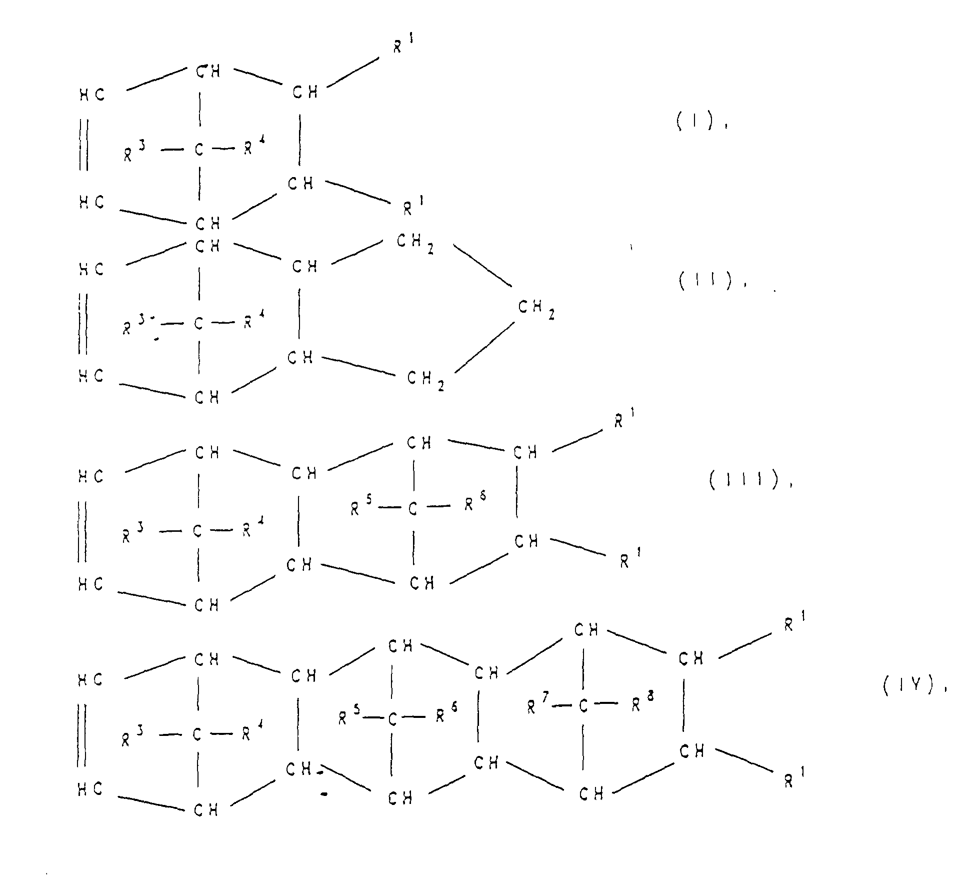 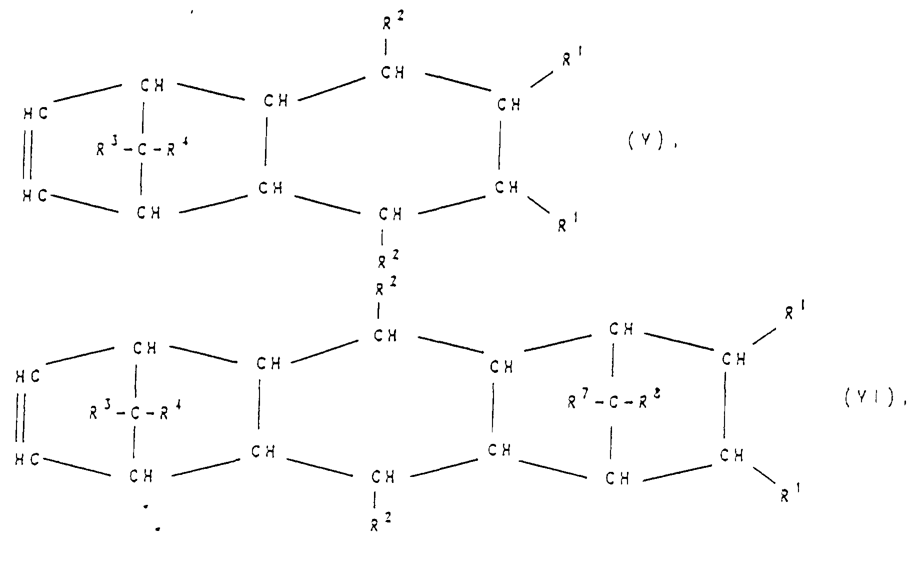 worin R¹, R², R³, R⁴, R⁵, R⁶, R⁷ und R⁸ gleich oder verschieden sind und ein Wasserstoffatom, einen C₆-C₁₆-Aryl- oder einen C₁-C₈-Alkylrest bedeuten, wobei gleiche Reste in den verschiedenen Formeln eine unterschiedliche Bedeutung haben können,
0 bis 50 Gew.-%, bezogen auf die Gesamtmenge der Monomeren, eines Cycloolefins der Formel VII 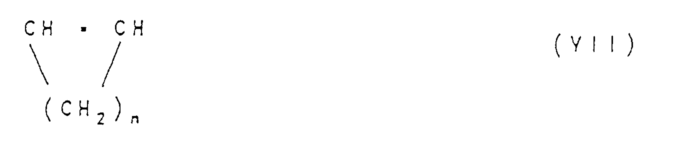 worin n eine Zahl von 2 bis 10 ist, und
70 bis 0,1 Gew.-%, bezogen auf die Gesamtmenge der Monomeren, mindestens eines acyclischen Olefins der Formel VIII 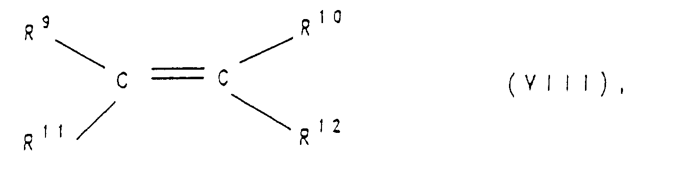 worin R⁹, R¹⁰, R¹¹ und R¹² gleich oder verschieden sind und ein Wasserstoffatom oder einen C₁-C₈-Alkylrest bedeuten, bei Temperaturen von -78 bis 150°C und einem Druck von 0,01 bis 64 bar, in Gegenwart eines Katalysators, welcher aus einem Aluminoxan der Formel IX 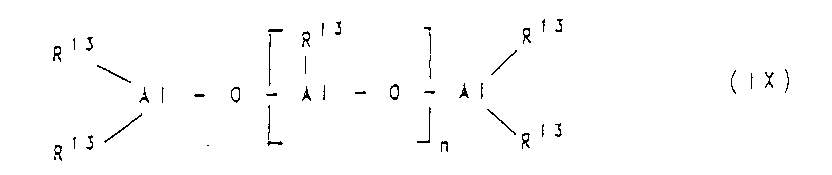 für den linearen Typ und/oder der Formel X 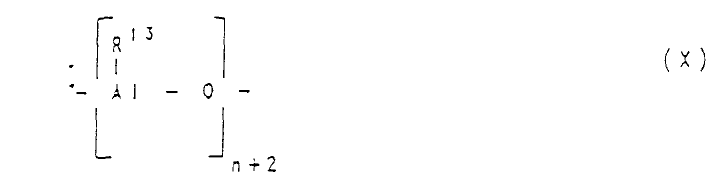 für den cyclischen Typ, wobei in den Formeln IX und X die Reste R¹³ gleich oder verschieden sind und eine C₁-C₆-Alkylgruppe oder Phenyl oder Benzyl bedeuten und n eine ganze Zahl von 0 bis 50 ist, und einem Metallocen der Formel XI 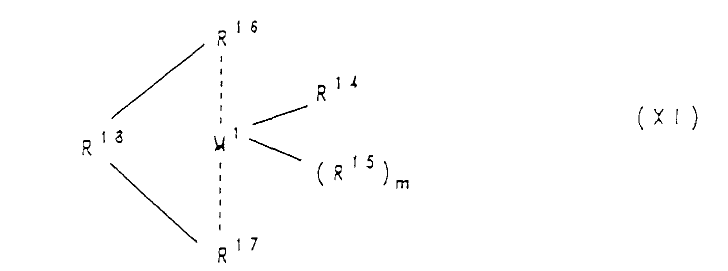 besteht, worin
M¹ Titan, Zirkon, Hafnium, Vanadium, Niob oder Tantal ist,
R¹⁴ und R¹⁵ gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten, m = 1 oder 2,
R¹⁶ und R¹⁷ gleich oder verschieden sind und einen ein- oder mehrkernigen Kohlenwasserstoffrest, welcher mit dem Zentralatom M¹ eine Sandwichstruktur bilden kann, bedeuten,
R¹⁸ 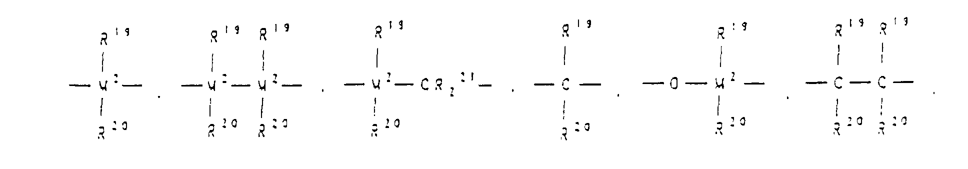 = BR¹⁹ = AIR¹⁹, -Ge-, -Sn-, -O-, -S-, = SO, = SO₂, = NR¹⁹,
= CO, = PR¹⁹ oder = P(O)R¹⁹ ist, wobei R¹⁹, R²⁰ und R²¹
gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁹ und R²⁰ oder R¹⁹ und R²¹ jeweils mit den sie verbindenden Atomen einen Ring bilden, und
M² Silizium, Germanium oder Zinn ist,
wobei der Teil des Metallocens der Formel (XI), der durch M¹ und R¹⁶ sowie R¹⁷ gebildet wird, eine C₁-Symmetrie aufweist und das Cycloolefincopolymer weniger als 100 ppm Katalysatorreste enthält.

2. Verfahren zur Herstellung einer Faser nach Anspruch 1, wobei das Metallocen der Formel Xl zur Herstellung des Cycloolefincopolymers
Isopropylen (9-fluorenyl)(1-(3-ethyl)cyclopentadienyl)zirkondichlorid,
lsopropylen-(9-fluorenyl)(1-(3-isopropyl)cyclopentadienyl)-zirkondichlorid,
Isopropylen-(9-fluorenyl) (1-(3-methyl)cyclopentadienyl)-zirkondichlorid,
Diphenylmethylen-(9-fluorenyl) (1-(3-methyl)cyclopentadienyl)-zirkondichlorid, Methylphenylmethylen-(9-fluorenyl)(1-(3-methyl)cyclopentadienyl)zirkondichlorid,
Dimethylsilyl(9-fluorenyl)(1-(3-isopropyl)cyclopentadienyl)-zirkondichlorid,
Dimethylsilyl-(9-fluorenyl)(1-(3-methyl)cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid, lsopropenyl(2,3,4,5-tetramethylcyclopentadienyl)-(1-(3-methyl)cyclopentadienyl)-zirkondichlorid,
lsopropylen-(9-fluorenyf)(1-(3-tert.-butyl)cyclopentadienyl)-zirkondichlorid oder das entsprechende Hafniumdichlorid ist.

3. Verfahren zur Herstellung einer Faser nach Anspruch 1 oder 2, wobei das Cycloolefincopolymer Norbornen oder Tetracyclododecen als polycyclisches Olefin enthält.

4. Verfahren zur Herstellung einer Faser nach einem oder mehreren der Ansprüche 1 bis 3, wobei das Cycloolefincopolymer ein Copolymer aus Norbornen und Ethylen ist.

5. Verfahren zur Herstellung einer Faser nach einem oder mehreren der Ansprüche 1 bis 4, wobei das Cycloolefincopolymer das symmetrische, polycyclische Olefin und das acyclische Olefin im Molverhältnis 1:1 enthält.

6. Verfahren zur Herstellung einer Faser nach einem oder mehreren der Ansprüche 1 bis 5, wobei die Polymerisation in einem Alkan als Lösungsmittel durchgeführt wird und Partikelbildung auftritt.

## Claims

1. A process for the production of a fiber of cycloolefin copolymer, in which the .cycloolefin copolymer is prepared by polymerization of from 30 to 99.9% by weight, based on the total amount of monomers, of at least one symmetrical, polycyclic olefin of the formula I, II, III, IV, V or VI 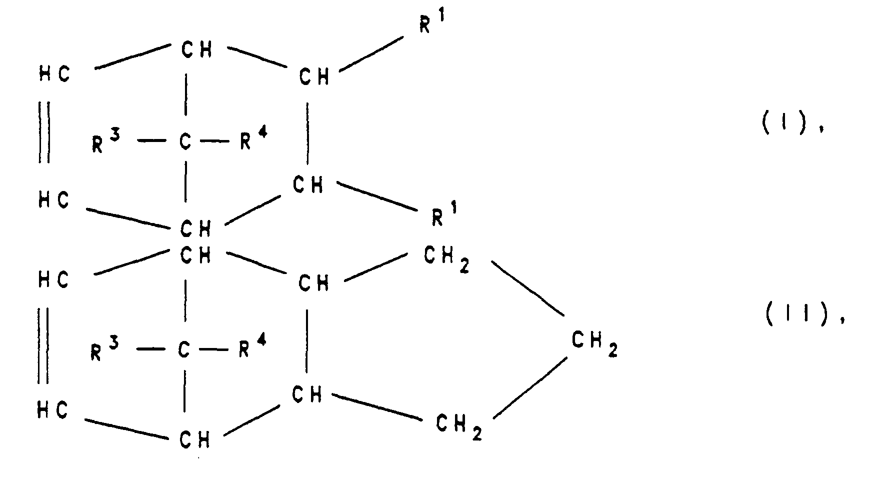 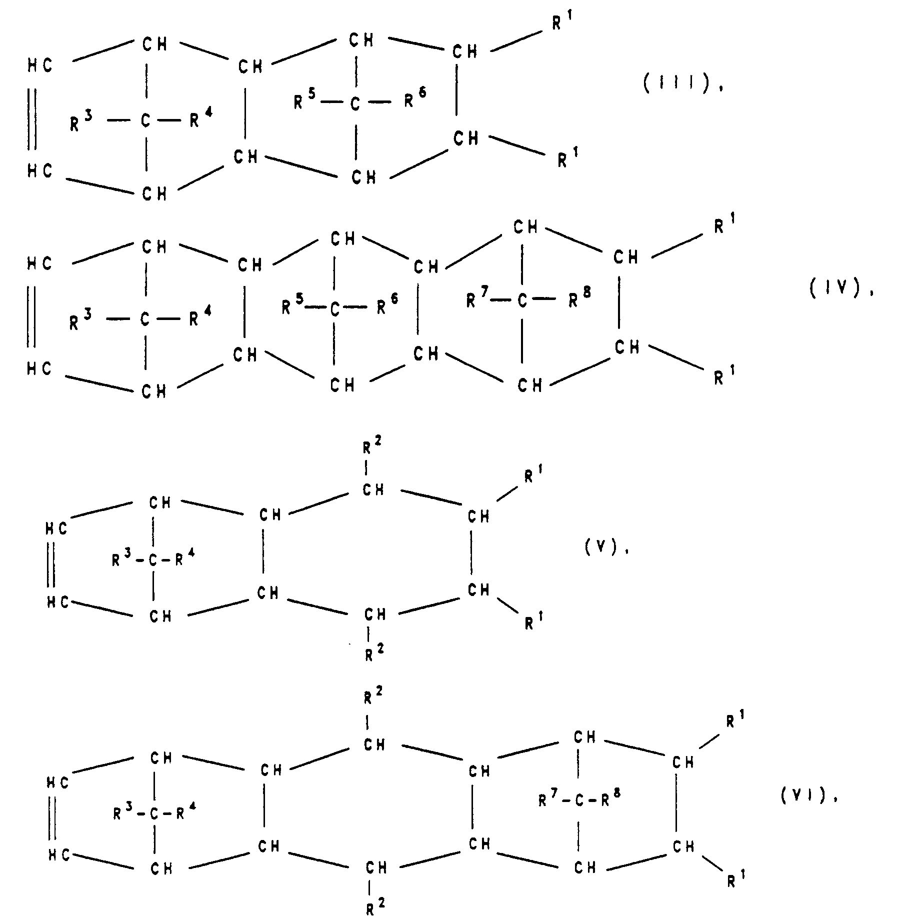 in which R¹, R², R³, R⁴, R⁵, R⁶, R⁷ and R⁸ are identical or different and are a hydrogen atom, a C₆-C₁₆-aryl or a C₁-C₈-alkyl radical, with the same radicals in the various formulae being able to have a different meanings,
from 0 to 50% by weight, based on the total amount of monomers, of a cycloolefin of the formula VII 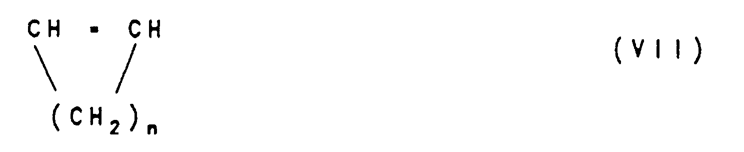 in which n is a number from 2 to 10, and
from 70 to 0.1% by weight, based on the total amount of monomers, of at least one acyclic olefin of the formula VIII 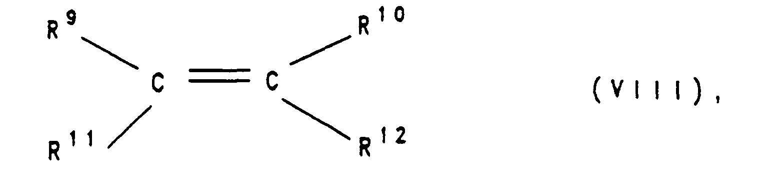 in which R⁹, R¹⁰, R¹¹ and R¹² are identical or different and are a hydrogen atom or a C₁-C₈-alkyl radical, at temperatures from -78 to 150°C and a pressure from 0.01 to 64 bar, in the presence of a catalyst which comprises an aluminoxane of the formula IX 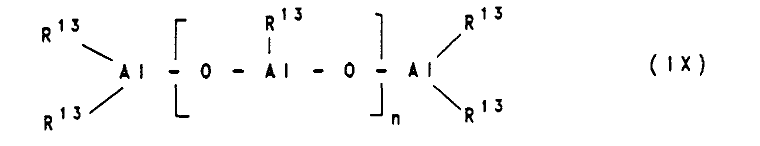 for the linear type and/or of the formula X 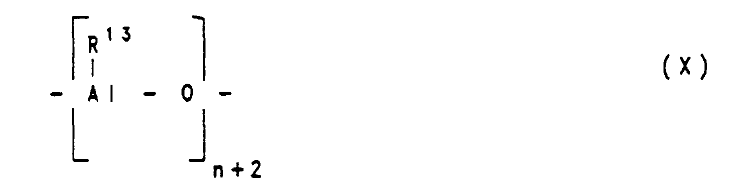 for the cyclic type, where in the formulae IX and X the radicals R¹³ are identical or different and are a C₁-C₆-alkyl group or phenyl or benzyl and n is an integer from 0 to 50, and a metallocene of the formula XI 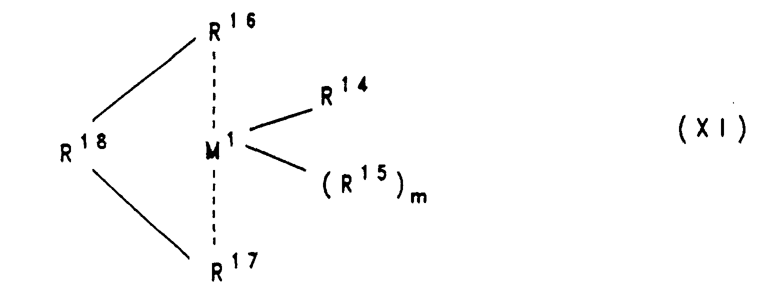 in which
M¹ is titanium, zirconium, hafnium, vanadium, niobium or tantalum,
R¹⁴ and R¹⁵ are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group, m = 1 or 2,
R¹⁶ and R¹⁷ ⁷ are identical or different and are a monocyclic or polycyclic hydrocarbon radical which can form a sandwich structure with the central atom M¹,
R¹⁸ is 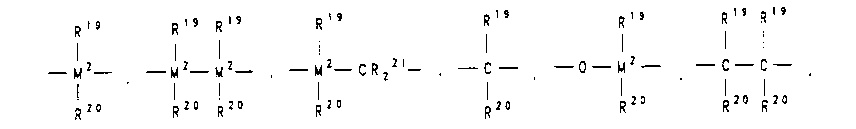 = BR¹⁹ = AlR¹⁹, -Ge-, -Sn-, -O-, -S-, = SO, = SO₂, = NR¹⁹, = CO, = PR¹⁹ or = P(O)R¹⁹, where R¹⁹, R²⁰ and R²¹ are identical or different and are a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹⁹ and R²⁰ or R¹⁹ and R²¹ form a ring with the atoms linking them in each case, and
M² is silicon, germanium or tin,
wherein the part of the metallocene of the formula (XI) which is formed by M¹ and R¹⁶ and also R¹⁷ has C₁ symmetry and the cycloolefin copolymer contains less than 100 ppm of catalyst residues.

2. The process for the production of a fiber as claimed in claim 1, in which the metallocene of the formula XI for the preparation of the cycloolefin copolymer is
isopropylene (9-fluorenyl)(1-(3-ethyl)cyclopentadienyl)zirconium dichloride,
isopropylene(9-fluorenyl)(1-(3-sopropyl)cyclopentadienyl)zirconium dichloride,
isopropylene (9-fluorenyl) (1-(3-methyl) cyclopentadienyl)zirconium dichloride,
diphenylmethylene (9-fluorenyl) (1-(3-methyl)cyclopentadienyl)zirconium dichloride,
methylphenylmethylene (9-fluorenyl)(1-(3-methyl)cyclopentadienyl)zirconium dichloride,
dimethylsilyl (9-fluorenyl) (1-(3-isopropyl)cyclopentadienyl) zirconium dichloride,
dimethylsilyl (9-fluorenyl) (1-(3-methyl)cyclopentadienyl)zirconium dichloride,
diphenylsilyl (9-fluorenyl)(1-(3-methyl)cyclopentadienyl) zirconium dichloride,
diphenylmethylene (9-fluorenyl) (1-(3-tert-butyl)cyclopentadienyl) zirconium dichloride,
isopropenyl (2,3,4,5-tetramethylcyclopentadienyl)(1-(3-methyl)cyclopentadienyl)zirconium dichloride,
isopropylene (9-fluorenyl) (1-(3-tert-butyl)cyclopentadienyl)zirconium dichloride or the corresponding hafnium dichloride.

3. The process for the production of a fiber as claimed in claim 1 or 2, in which the cycloolefin copolymer comprises norbornene or tetracyclododecene as polycyclic olefin.

4. The process for the production of a fiber as claimed in one or more of claims 1 to 3, in which the cycloolefin copolymer is a copolymer of norbornene and ethylene.

5. The process for the production of a fiber as claimed in one or more of claims 1 to 4, in which the cycloolefin copolymer contains the symmetrical polycyclic olefin and the acyclic olefin in a molar ratio of 1:1.

6. The process for the production of a fiber as claimed in one or more of claims 1 to 5, in which the polymerization is carried out in alkane as solvent with particle formation.

## Revendications

1. Procédé de préparation d'une fibre de copolymère cyclo-oléfinique, dans lequel le copolymère cyclo-oléfinique est préparé par polymérisation de 30 à 99,9% en poids, par rapport à la quantité totale des monomères, d'au moins une oléfine polycyclique symétrique de formules I, II, III, IV, V ou VI 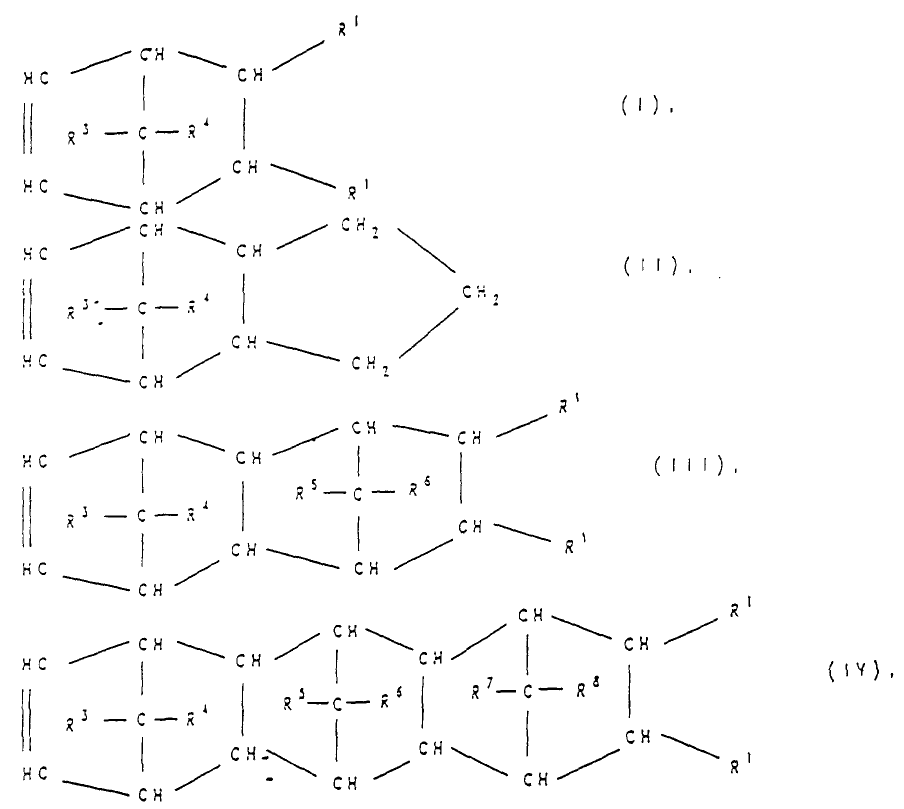 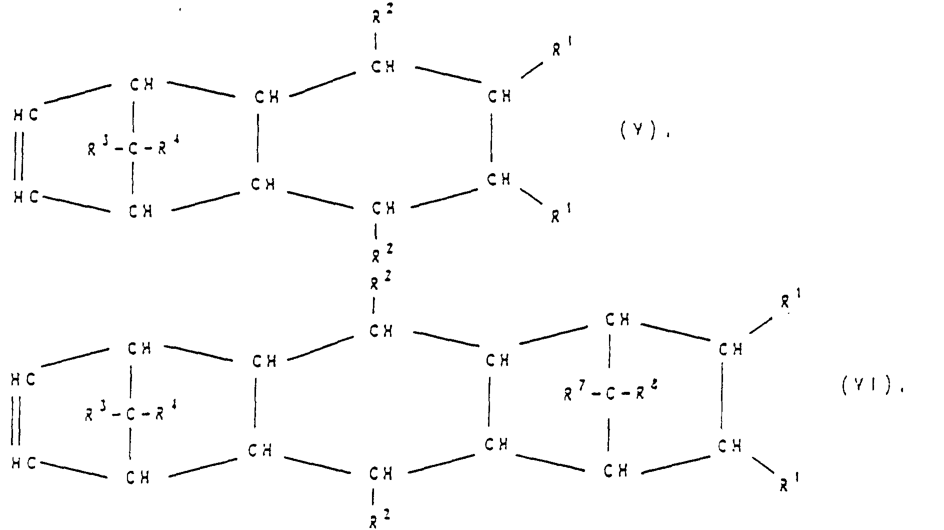 dans lesquelles R¹, R², R³, R⁴, R⁵, R⁶, R⁷ et R⁸ sont identiques ou différents et représentent un atome d'hydrogène, un radical aryle en C₆-C₁₆ ou un radical alkyle en C₁-C₈, où des radicaux identiques dans les diverses formules peuvent avoir une signification différente,
de 0 à 50% en poids, par rapport à la quantité totale des monomères, d'une cyclo-oléfine de formule VII 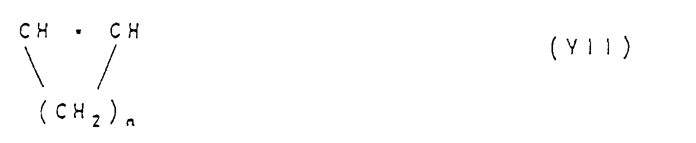 dans laquelle n est un nombre de 2 à 10, et
de 70 à 0,1% en poids, par rapport à la quantité totale des monomères, d'au moins une oléfine acyclique de formule VIII, 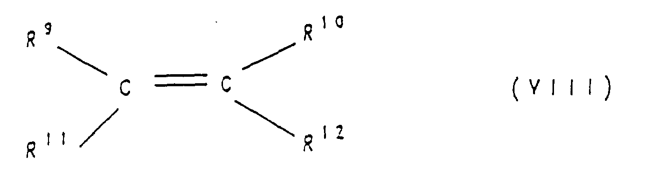 dans laquelle R⁹, R¹⁰, R¹¹ et R¹² sont identiques ou différents et représentent un atome d'hydrogène ou un radical alkyle en C₁-C₈, à des températures de -78 à 150°C et une pression de 0,01 à 64 bars, en présence d'un catalyseur qui est constitué d'un aluminoxane de formule IX 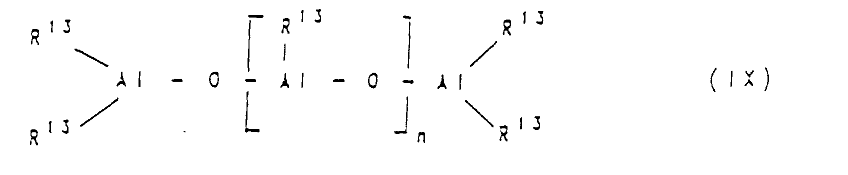 pour le type linéaire et/ou de formule X 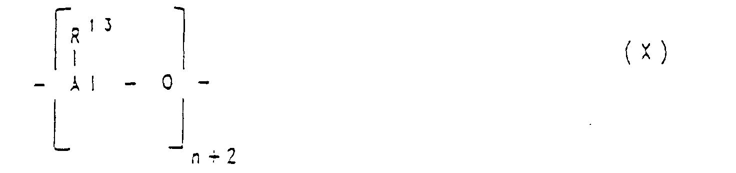 pour le type cyclique, où dans les formules IX et X, les radicaux R¹³ sont identiques ou différents et représentent un groupe alkyle en C₁-C₆ ou un phényle ou benzyle, et n est un entier de 0 à 50, et d'un métallocène de formule XI 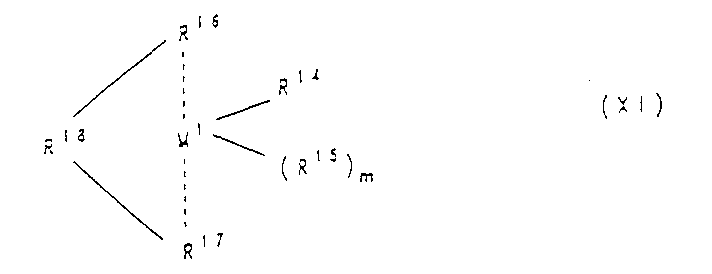 dans laquelle
M¹ est le titane, le zirconium, le hafnium, la vanadium, le niobium ou le tantale,
R¹⁴ et R¹⁵ sont identiques ou différents et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
m = 1 ou 2,
R¹⁶ et R¹⁷ sont identiques ou différents et représentent un radical hydrocarboné monocyclique ou polycyclique pouvant former une structure en sandwich avec l'atome central M¹,
R¹⁸ est 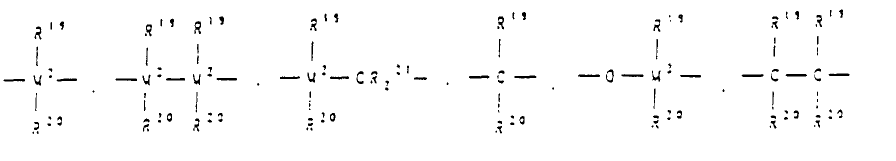 = BR¹⁹ = AlR¹⁹, -Ge-, -Sn-, -O-, -S-, = SO, = SO₂, = NR¹⁹, = CO, = PR¹⁹ ou = P(O)R¹⁹, où R¹⁹, R²⁰ et R²¹ sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹⁹ et R²⁰ ou R¹⁹ et R²¹ forment dans chaque cas un cycle avec les atomes qui y sont liés, et
M² est le silicium, le germanium ou l'étain,
où la partie du métallocène de formule (XI) qui est formée par M¹ et R¹⁶ ainsi que R¹⁷ présente une symétrie par rapport à C₁ et la teneur résiduelle en catalyseur du copolymère cyclo-oléfinique est inférieure à 100 ppm.

2. Procédé de préparation d'une fibre selon la revendication 1, dans lequel le métallocène de formule XI destiné à la préparation du copolymère cyclo-oléfinique est
le dichlorure d'isopropylène(9-fluorényl) (1-(3-éthyl) cyclopentadiényl) zirconium,
le dichlorure d'isopropylène (9-fluorényl) (1-(3-isopropyl) cyclopentadiényl) zirconium,
le dichlorure d'isopropylène(9-fluorényl) (1-(3-(méthyl)cyclopentadiényl) zirconium,
le dichlorure de diphénylméthylène (9-fluorényl) (1-(3-méthyl) cyclopentadiényl) zirconium,
le dichlorure de méthylphénylméthylène (9-fluorényl) (1-(3-méthyl) cyclopentadiényl) zirconium,
le dichlorure de diméthylsilyl (9-fluorényl) (1-(3-isopropyl) cyclopentadiényl) zirconium,
le dichlorure de diméthylsilyl (9-fluorényl) (1-(3-méthyl) cyclopentadiényl) zirconium,
le dichlorure de diphénylsilyl (9-fluorényl) (1-(3-méthyl) cyclopentadiényl) zirconium,
le dichlorure de diphénylméthylène (9-fluorényl) (1- (3-tert-butyl) cyclopentadiényl) zirconium,
le dichlorure d'isopropényl (2,3,4,5-tetraméthylcyclopentadiényl)-(1- (3-méthyl) cyclopentadiényl) zirconium,
le dichlorure d'isopropylène(9-fluorényl)(1-(3-tert-butyl)cyclopentadiényl)zirconium ou le dichlorure de hafnium correspondant.

3. Procédé de préparation d'une fibre selon la revendication 1 ou 2, dans lequel le copolymère cyclo-oléfinique comprend du norbornène ou du tétracyclododécène en tant qu'oléfine polycyclique.

4. Procédé de préparation d'une fibre selon l'une ou plusieurs des revendications 1 à 3, dans lequel le copolymère cyclo-oléfinique est un copolymère de norbornène et d'éthylène.

5. Procédé de préparation d'une fibre selon l'une ou plusieurs des revendications 1 à 4, dans lequel le copolymère cyclo-oléfinique comprend l'oléfine polycyclique symétrique et l'oléfine acyclique en un rapport molaire de 1:1.

6. Procédé de préparation d'une fibre selon l'une ou plusieurs des revendications 1 à 5, dans lequel la polymérisation est réalisée dans un alcane en tant que solvant, avec formation de particules.
